# EUROPÄISCHE PATENTSCHRIFT

(11) **EP 3 827 917 B1**
(45) Veröffentlichungstag und Bekanntmachung des Hinweises auf die Patenterteilung: **15.01.2025**
(21) Anmeldenummer: 19212256.2
(22) Anmeldetag: 28.11.2019
(51) Int. Cl.: B23B 31/30, B23K 20/12, B23K 20/227, B23K 20/24, B23K 101/20, B23K 103/04, B23P 15/00

(54) **DEHNSPANNEINRICHTUNG UND VERFAHREN ZU DEREN HERSTELLUNG**
EXPANSION CLAMPING DEVICE AND METHOD FOR THE PRODUCTION THEREOF
DISPOSITIF DE SERRAGE EXTENSIBLE ET SON PROCÉDÉ DE FABRICATION

(43) Veröffentlichungstag der Anmeldung: 02.06.2021
(73) Patentinhaber: Klaus Reiser GmbH & Co. KG, 71735 Eberdingen (DE)
(72) Erfinder: RETZBACH, Thomas, 74357 Bönningheim (DE)
(74) Vertreter: Thum & Partner I Thum Mötsch Weickert Patentanwälte PartG mbB

(56) Entgegenhaltungen:
- EP-A2- 2 347 842
- WO-A1-93/10928
- WO-A1-98/46896
- DE-A1- 102017 002 436
- DE-A1- 19 926 152
- JP-A- H02 262 904
- US-B1- 7 217 072

## Beschreibung

Die vorliegende Erfindung betrifft eine Dehnspanneinrichtung mit einem Grundkörper, der eine Längsachse definiert, und einer Dehnbüchse, die unter Bildung wenigstens einer Druckkammer in den Grundkörper eingesetzt ist oder diesen umgibt, wobei die Druckkammer unter elastischer Verformung der Dehnbüchse mit einem Hydraulikmittel beaufschlagbar ist, um eine Spannwirkung zu erzielen. Des Weiteren betrifft die Erfindung ein Verfahren zur Herstellung eine Dehnspanneinrichtung mit einem Grundkörper und einer Dehnbüchse, die unter Bildung einer geschlossenen Druckkammer in den Grundkörper eingesetzt ist. Außerdem betrifft die Erfindung ein Verfahren zur Herstellung einer Dehnspanneinrichtung mit einem Grundkörper und einer Dehnbüchse, die den Grundkörper unter Bildung einer geschlossenen Druckkammer umgibt.

Dehnspanneinrichtungen dieser Art sind in unterschiedlichen Ausführungsformen bekannt und werden in erster Linie eingesetzt, um einen Werkzeugschaft, wie beispielsweise einen Bohrer- oder Fräserschaft, in der Arbeitsspindel einer entsprechenden Werkzeugmaschine zu fixieren. Man unterscheidet zwischen zwei Arten von Dehnspanneinrichtungen, nämlich zum einen zwischen dem sogenannten Spanndorn, bei dem die Dehnbüchse den Grundkörper umgibt und sich bei Druckbeaufschlagung der Druckkammer radial nach außen aufweitet, und zum anderen dem Dehnspannfutter, bei dem die Dehnbüchse in den Grundkörper eingesetzt ist und zum Spannen einer Welle oder eines Schaftes radial nach innen verformt wird.

Die EP 2 347 842 A2 beschreibt eine Dehnspanneinrichtung gemäß dem Oberbegriff des Anspruchs 1, ein Verfahren gemäß dem Oberbegriff des Anspruchs 8 und ein Verfahren gemäß dem Oberbegriff des Anspruchs 13. Bei dieser Dehnspanneinrichtung sind der Grundkörper und die Dehnbüchse mittels einer Lötverbindung aneinander fixiert.

Dabei sind ein Grundkörper und/oder eine Dehnbüchse aus einem niedrig legierten Vergütungsstahl und ein Lötmaterial, dessen Schmelztemperatur oberhalb der Härtungstemperatur des Vergütungsstahls liegt, vorgesehen. Die Lötverbindung zwischen dem Grundkörper und der Dehnbüchse wird durch ein Hochtemperaturlötverfahren hergestellt, bei dem die Dehnbüchse an dem Grundkörper positioniert und die Anordnung zusammen mit dem erforderlichen Lötmaterial, das in dafür vorgesehene Nuten in den gewünschten Verbindungsbereichen untergebracht ist, in einem Hochtemperaturofen erhitzt wird, um das Lötmaterial aufzuschmelzen und die Dehnbüchse und den Grundkörper stoffschlüssig miteinander zu verbinden.

Die vorbekannte Dehnspanneinrichtung aus dem Stand der Technik hat sich in der Praxis durchaus bewährt. Gelegentlich kommt es jedoch vor, dass unter Druckbeanspruchung die Lötverbindungen aufreißen und die Dehnspanneinrichtung versagt. Des Weiteren ist es ein stetiges Bedürfnis, die Herstellung einer Dehnspanneinrichtung weiter zu vereinfachen und eine einfache Fertigung dieser zu ermöglichen.

Davon ausgehend ist es eine Aufgabe der vorliegenden Erfindung, eine alternative Dehnspanneinrichtung anzugeben, welche auf einfache Weise hergestellt werden kann.

Die Aufgabe ist erfindungsgemäß durch eine Dehnspanneinrichtung gemäß dem Anspruch 1 gelöst, bei welcher die Dehnbüchse an dem vorderen axialen Endbereich der Druckkammer und/oder an dem hinteren axialen Endbereich der Druckkammer über eine Reibschweißverbindung an dem Grundkörper stoffschlüssig fixiert ist.

Der Erfindung liegt somit die Überlegung zugrunde, die Dehnbüchse über eine Reibschweißverbindung mit dem Grundkörper zu verbinden. Ein Vorteil der Reibschweißverbindung liegt in deren Festigkeit, welche über der Festigkeit der Werkstoffe des Grundkörpers und der Dehnbüchse liegen kann. Da kein Lötmaterial zwischen dem Grundkörper und der Dehnbüchse eingeführt werden muss, lässt sich eine Reibschweißverbindung mit verhältnismäßig geringem Aufwand fertigen. Außerdem können die Verbindungsstellen zwischen dem Grundkörper und der Dehnbüchse bei einer Reibschweißverbindung wesentlich einfacher gestaltet werden als bei einer Lötverbindung. Über eine Reibschweißverbindung können außerdem mehr Werkstoffkombinationen miteinander verbunden werden, als bei einer Lötverbindung. Schließlich ist bei einer Verbindung von Grundkörper und Dehnbüchse über eine Reibschweißverbindung die Verwendung von Stahlwerkstoffen mit hoher Festigkeit und Härte möglich, da in Vergleich mit einer Lötverbindung weniger Wärme in den Grundkörper und die Dehnbüchse eingebracht wird und eine temperaturbedingte Schädigung der Werkstoffe somit verhindert wird.

Vorzugsweise nimmt die Druckkammer in ihrem zu einer Reibschweißverbindung benachbarten vorderen und/oder hinteren axialen Endbereich eine beim Erstellen der Reibschweißverbindung erzeugte Schweißwulst auf und ist hier insbesondere in radialer Richtung gegenüber einem in axialer Richtung zentralen Bereich der Druckkammer verbreitert.

Wenn der Grundkörper und die Dehnbüchse zum Erstellen der Reibschweißverbindung axial gegeneinandergedrückt und durch die bei einer Relativrotation des Grundkörpers und der Dehnbüchse erzeugte Reibung erwärmt werden, wird ein Teil des erwärmten, sich plastisch verformenden Werkstoffes des Grundkörpers und der Dehnbüchse radial verdrängt. Dadurch, dass die Druckkammer in dem zu der Reibschweißverbindung benachbarten Bereich verbreitert ist, kann sich in diesem Bereich eine dabei enstehende Schweißwulst ausbilden.

Gemäß einer bevorzugten Ausgestaltung ist die Dehnbüchse unter Bildung einer einzigen, sich ringförmig um die Längsachse erstreckenden Drucckammer in den Grundkörper eingesetzt oder umgibt diesen und ist an ihrem vorderen und/oder hinteren Endabschnitt an dem Grundkörper über eine Reibschweißverbindung stoffschlüssig fixiert. Somit ist lediglich eine Drucckammer vorgesehen, welche sich nahezu über die gesamte Länge der Dehnbüchse erstreckt und an zumindest einem ihrer Endabschnitte durch die Reibschweißverbindung begrenzt und abgedichtet ist. An dem anderen Endabschnitt kann die Druckkammer durch ein Abdichtungsmittel, beispielsweise durch einen O-Ring, abgedichtet sein. Vorteilhafterweise kann die Druckkammer an beiden ihren Endabschnitten durch eine Reibschweißverbindung begrenzt sein, wodurch eine besonders zuverlässige Abdichtung der Druckkammer erreicht wird.

Nach einer weiteren Ausführungsform ist es vorgesehen, dass die Dehnbüchse unter Bildung von zwei axial hintereinanderliegenden Druckkammern in den Grundkörper eingesetzt ist oder diesen umgibt. Durch die zwei axial hintereinanderliegenden Druckkammern werden ein verbessertes Spannen eines Werkstücks und eine genauere axiale Ausrichtung des zu spannenden Werkstücks ermöglicht.

In bevorzugter Weise ist vorgesehen, dass die Dehnbüchse axial zwischen den Druckkammern über eine Reibschweißverbindung an dem Grundkörper stoffschlüssig fixiert ist. Die beiden Druckkammern werden somit gegeneinander über eine Reibschweißverbindung abgedichtet. Das vordere Ende der vorderen und das hintere Ende der hinteren Druckkammer können durch Abdichtungsmittel, beispielsweise durch O-Ringe oder Lötverbindungen, abgedichtet sein.

Ferner kann die Dehnbüchse an dem hinteren axialen Endbereich der hinteren Druckkammer und/oder an dem vorderen axialen Endbereich der vorderen Druckkammer an dem Grundkörper über eine Reibschweißverbindung stoffschlüssig fixiert sein. Besonders bevorzugt kann die Dehnbüchse an beiden ihren axialen Endabschnitten über eine Reibschweißverbindung stoffschlüssig an dem Grundkörper fixiert sein, während der Bereich zwischen den beiden Druckkammern durch ein Abdichtungsmittel, beispielsweise durch einen O-Ring, abgedichtet sein kann. Dabei werden die über Reibschweißverbindungen abgegrenzten Endabschnitte der Dehnbüchse auf besonders zuverlässige Weise abgedichtet.

Grundsätzlich ist es ebenfalls möglich, dass bei einer Ausgestaltung mit zwei axial hintereinanderliegenden Druckkammern die vordere Druckkammer nach vorne, die hintere Druckkammer nach hinten und die beiden Drucckammern zueinander durch jeweils eine Reibschweißverbindung begrenzt sind, sodass die Dehnbüchse über insgesamt drei axial hintereinanderliegende Reibschweißverbindungen stoffschlüssig an dem Grundkörper fixiert ist.

Des Weiteren kann die Dehnbüchse ebenfalls unter der Bildung von mehr als zwei Druckkammern in den Grundkörper eingesetzt sein oder diesen umgeben.

In bevorzugter Weise ist die oder jede Reibschweißverbindung durch aufgleitendes Reibschweißen hergestellt und/oder die oder jede Reibschweißverbindung ist durch ein Rotationsschweißverfahren hergestellt. Dadurch kann die zumindest eine Verbindung zwischen dem Grundkörper und der Dehnbüchse auf besonders einfache Weise hergestellt werden. Während zwei Bauteile durch Reibschweißen zumeist stirnseitig miteinander verschweißt werden, versteht man unter aufgleitendem Reibschweißen ein Reibschweißverfahren, bei welchem zwei Bauteile, von denen eines zylindrisch ausgestaltet ist und ein anderes hohlzylindrisch ausgestaltet ist, an einer radial äußeren Umfangsfläche des zylindrischen Bauteils und einer dazu korrespondierenden radial inneren Umfangsfläche des hohlzylindrischen Bauteils und miteinander verbunden werden. Dabei können die zueinander korrespondierenden Umfangsflächen konisch ausgebildet sein, um eine Reibkraft aufbringen zu können.

Vorzugsweise ist zumindest die Dehnbüchse wärmebehandelt, insbesondere einsatzgehärtet und/oder vergütet und/oder nitriert. Dadurch kann die Oberfläche der Dehnbüchse, insbesondere deren Innenfläche, gehärtet werden. Besonders bevorzugt kann vorgesehen sein, dass der Grundkörper und die mit diesem verbundene Dehnbüchse nitriert und insbesondere gasnitriert sind, wobei der Nitriervorgang nach dem Fixieren über die Reibschweißverbindung erfolgt. In bevorzugter Weise erfolgt der Nitriervorgang bei einer Temperatur von 500 bis 600 °C, insbesondere bei 550°C für eine Dauer von 6 bis 10 Stunden, insbesondere von 7 bis 9 Stunden. Dabei wird das Grundgefüge angelassen und eine hohe Oberflächenhärte von 650 - 750 HV1 (Vickershärte) mit einem entsprechenden Korrosionsschutz erzielt.

Nach einer bevorzugten Ausführungsform weist die Dehnbüchse einen unlegierten Stahl und/oder einen niedrig legierten Stahl und/oder einen hochlegierten Stahl und/oder einen Einsatzstahl, insbesondere einen 20MnCrS5-Einsatzstahl, und/oder ein Keramikmaterial, auf oder besteht daraus. Ein 20MnCrS5-Einsatzstahl ist kostengünstig und kann mit geringem Aufwand bearbeitet werden. Dadurch ist der Verschleiß der zum Bearbeiteten der Dehnbüchse verwendeten Zerspanungswerkzeuge überschaubar.

Gemäß einer bevorzugten Ausgestaltung kann die Dehnbüchse in den Grundkörper eingesetzt sein und die Innenfläche der Dehnbüchse eine Spannfläche bilden, wobei die Spannfläche insbesondere mit einer Oberflächenbeschichtung versehen ist. Demzufolge ist die Dehnspanneinrichtung als Dehnspannfutter ausgestaltet, dessen Spannfläche ein Werkzeug aufnehmen und kraftschlüssig fixieren kann. Die Oberflächenbeschichtung schützt die Spannfläche gegen Korrosion und/oder Verschleiß, so dass diese eine verlängerte Lebensdauer aufweist.

Alternativ kann die Dehnbüchse den Grundkörper umgeben und die Außenfläche der Dehnbüchse eine Spannfläche bilden, wobei die Spannfläche insbesondere mit einer Oberflächenbeschichtung versehen ist. Demzufolge ist die Dehnspanneinrichtung als Spanndorn ausgestaltet, über welchen ein Bauteil, insbesondere ein Werkzeug, radial von innen gespannt werden kann.

In bevorzugter Weise kann die Oberflächenbeschichtung durch Oxidieren oder durch Manganphosphatierung aufgebracht sein. Dadurch können die Korrosionsbeständigkeit und die Verschleißbeständigkeit der Spannfläche verbessert werden. Vorzugsweise kann zur Erhöhung der Korrosionsbeständigkeit, die Spannfläche gebläut bzw. oxidiert werden, wodurch sich eine quasi schwarzblaue Oberfläche ergibt. Die so hergestellte Dehnspanneinrichtung kann dann endbearbeitet werden, wobei sie aufgrund des Materialabtrages ihre Härte verliert, die nach durchgeführten Versuchen bei etwa 550 - 650 HV1 liegt. Alternativ kann die Spannfläche durch Manganphosphatierung beschichtet werden. Dabei handelt es sich um ein rein chemisches Verfahren.

Zweckmäßigerweise kann die Dehnspanneinrichtung Spannmittel aufweisen, die ausgebildet sind, wahlweise eine Druckerhöhung in dem Hydraulikmittel zu bewirken, wobei die Spannmittel über einen Hydraulikmittelzuführkanal mit der Druckkammer wirkverbunden sind. Das sich in der Druckkammer befindliche Hydraulikmittel kann somit auf einfache Weise mit Druck beaufschlagt werden, so dass sich die Dehnbüchse radial nach innen oder außen verformt und somit ein Werkzeugschaft ohne großen Aufwand kraftschlüssig fixiert werden kann.

Ferner ist es eine Aufgabe der Erfindung, ein Verfahren zur Herstellung einer Dehnspanneinrichtung anzugeben.

Diese Aufgabe wird gelöst durch ein Verfahren gemäß dem Anspruch 8 zur Herstellung einer als Dehnspannfutter ausgestalteten Dehnspanneinrichtung mit einem Grundkörper, der eine Längsachse definiert, und einer Dehnbüchse, die unter Bildung wenigstens einer geschlossenen Druckkammer in den Grundkörper eingesetzt ist und eine zentrale Aufnahme zylindrischer Grundform mit einer Spannfläche definiert, in welche ein zu spannendes Bauteil von der Vorderseite der Dehnspanneinrichtung her eingeschoben werden kann, aufweisend folgende Schritte:
a) Bereitstellung eines Grundkörpers, der eine zur vorderen Stirnseite des Grundkörpers offene zentrale Axialbohrung aufweist, und eines Dehnbüchsenwerkstücks, das einen in die zentrale Axialbohrung des Grundkörpers einschiebbaren Dehnbüchsenschaft zylindrischer Grundform aufweist, wobei in der Außenfläche des Dehnbüchsenschafts und/oder in der die zentrale Axialbohrung definierenden Innenfläche des Grundkörpers Vertiefungen zur Bildung der wenigstens einen Druckkammer ausgebildet sind,
b) Einschieben des Dehnbüchsenschaftes in die zentrale Axialbohrung des Grundkörpers,
c) Axiales Gegeneinanderdrücken des Grundkörpers und des Dehnbüchsenwerkstücks, während der Grundkörper und/oder das Dehnbüchsenwerkstück Bewegungen um die Längsachse ausführen, insbesondere um die Längsachse rotieren, um eine Relativbewegung zwischen dem Grundkörper und dem Dehnbüchsenwerkstück zu erzeugen, wobei zueinander korrespondierende Anschlagflächen des Grundkörpers und des Dehnbüchsenwerkstücks an dem vorderen axialen Endbereich der wenigstens einen Drucckammer und/oder an dem hinteren axialen Endbereich der wenigstens einen Druckkammer axial gegeneinander gedrückt und durch die Reibung erwärmt werden, so dass das Dehnbüchsenwerkstück an dem Grundkörper im Bereich der Anschlagflächen über eine Reibschweißverbindung stoffschlüssig fixiert wird,
d) Beendigung der Relativbewegung, so dass der Grundkörper und das Dehnbüchsenwerkstück abkühlen.

Bei dem Verfahren werden der Grundkörper und das Dehnbüchsenwerkstück zunächst axial zueinander ausgerichtet, wozu der Grundkörper und das Dehnbüchsenwerkstück fest in eine Reibschweißmaschine eingespannt werden können. Nun wird das Dehnbüchsenwerkstück durch eine axiale Zustellbewegung in den Grundkörper eigeschoben, bis der Grundkörper und das Dehnbüchsenwerkstück an mindestens zwei zueinander korrelierenden, insbesondere umlaufenden Anschlagflächen in Kontakt gebracht werden. Während des Einschiebens oder anschließend an das Einschieben, werden der Grundkörper und die Dehnbüchse in Relativrotation zueinander versetzt.

Während der Grundkörper und das Dehnbüchsenwerkstück zueinander in eine Relativrotation versetzt sind, werden das Dehnbüchsenwerkstück und der Grundkörper, insbesondere durch eine Axialkraft, an den korrelierenden, Anschlagflächen, gegeneinandergedrückt. Durch die so erzeugte Gleitreibung werden die Werkstoffe des Grundkörpers und des Dehnbüchsenwerkstücks an den Anschlagflächen erwärmt und Wärme wird in den Grundkörper und das Dehnbüchsenwerkstück eingebracht. Zum stoffschlüssigen Fixieren des Dehnbüchsenwerkstücks an dem Grundkörper wird die Relativrotation des Grundkörpers und des Dehnbüchsenwerkstücks abgebremst, wobei das Dehnbüchsenwerkstück und der Grundkörper optional weiter gegeneinandergedrückt werden, so dass der Grundkörper und/oder das Dehnbüchsenwerkstück unter Bildung einer Schweißwulst gestaucht werden und eine stoffschlüssige Verbindung entsteht.

Dadurch, dass das Dehnbüchsenwerkstück und der Grundkörper während des gesamten Reibschweißvorgangs in der Reibschweißmaschine eingespannt sind, kann eine genaue axiale Ausrichtung der Dehnbüchse zu dem Grundkörper gewährleistet werden. Rückstände von Kühlschmierstoffen oder Korrosionsschutzölen haben in der Regel keinen Einfluss auf die Qualität einer Reibschweißverbindung, sodass das Dehnbüchsenwerkstück und der Grundkörper keinem Reinigungsprozess unterzogen werden müssen, bevor aus diesen durch das angegebene Verfahren eine Dehnspanneinrichtung hergestellt wird.

Durch dieses Verfahren kann die Dehnbüchse mit geringem Aufwand über die Reibschweißverbindung stoffschlüssig an dem Grundkörper fixiert werden und die entstehende Druckkammer zuverlässig abgedichtet werden. Der verfahrensgemäße Schweißprozess kann vollständig automatisiert und in eine Fertigungslinie integriert werden. Die Reibschweißverbindung weist eine hohe Festigkeit auf, die durch deren einfache Gestaltung geringeren Schwankungen unterworfen ist als andere aus dem Stand der Technik bekannte Verbindungsformen, beispielsweise eine Lötverbindung.

Vorzugsweise kann das Dehnbüchsenwerkstück nach der Beendigung der Relativbewegung weiter in den Grundkörper eingepresst werden. Dadurch kann eine beständige Reibschweißverbindung erreicht werden, deren Schweißwulst vollständig in dem benachbarten axialen Endbereich der Druckkammer aufgenommen werden kann.

Nach einer bevorzugten Ausgestaltung kann in den Schritten a) bis d) der Dehnbüchsenschaft unter Bildung einer einzigen, sich ringförmig um die Längsachse erstreckenden Druckkammer in den Grundkörper eingesetzt werden und der Dehnbüchsenschaft an seinem vorderen und/oder hinterem Endabschnitt an dem Grundkörper über eine Reibschweißverbindung stoffschlüssig fixiert werden. Bei diesem Verfahren wird ein Dehnspannfutter mit lediglich einer ringförmig umlaufenden Druckkammer hergestellt, welche an zumindest einem ihrer Endabschnitte durch die Reibschweißverbindung begrenzt und abgedichtet ist. An dem anderen Endabschnitt kann die Drucckammer durch ein Abdichtungsmittel, beispielsweise durch einen O-Ring, abgedichtet werden. In bevorzugter Weise kann die Druckkammer an ihren beiden Endabschnitten durch jeweils eine Reibschweißverbindung begrenzt und abgedichtet werden, wodurch eine besonders zuverlässige Abdichtung der Druckkammer erfolgen kann.

Gemäß einer weiteren bevorzugten Ausgestaltung kann in den Schritten a) bis d) der Dehnbüchsenschaft unter Bildung zweier, axial hintereinanderliegender, sich ringförmig um die Längsachse erstreckender Druckkammern in den Grundkörper eingesetzt werden und über eine Reibschweißverbindung an dem Grundkörper stoffschlüssig fixiert werden. Dadurch kann ein Dehnspannfutter, welches durch die zwei axial hintereinanderliegenden Drucckammern ein verbessertes Spannen und eine genauere axiale Ausrichtung des zu spannenden Werkstücks ermöglicht, hergestellt werden.

Vorzugsweise kann dabei vorgesehen sein, dass in Schritt c) die jeweiligen zueinander korrespondierenden Anschlagflächen des Grundkörpers und des Dehnbüchsenwerkstücks an dem vorderen axialen Endbereich der vorderen Druckkammer und/oder an dem hinteren axialen Endbereich der hinteren Druckkammer ausgebildet sind. Besonders bevorzugt können die jeweiligen zueinander korrespondieren Anschlagflächen an dem vorderen axialen Endbereich der vorderen Druckkammer und an dem hinteren axialen Endbereich der hinteren Druckkammer ausgebildet sein, so dass das Dehnbüchsenwerkstück an diesen stoffschlüssig an dem Grundkörper fixiert werden kann. Da über eine Reibschweißverbindung der zu ihr benachbarte axiale Endbereich der Druckkammer oder die zu ihr benachbarten axialen Endbereiche der Druckkammern sowohl abgegrenzt, wie auch abgedichtet werden, erfolgt eine besonders zuverlässige Abdichtung dieses benachbarten Endbereiches oder dieser benachbarten Endbereiche. Der Bereich zwischen den zwei Druckkammern kann durch ein Abdichtungsmittel, beispielsweise durch einen O-Ring, abgedichtet werden.

Alternativ kann vorgesehen sein, dass in Schritt c) lediglich zwei zueinander korrespondierende Anschlagflächen des Grundkörpers und des Dehnbüchsenwerkstücks axial zwischen den beiden Druckkammern ausgebildet sind und das Dehnbüchsenwerkzeug an diesen stoffschlüssig an dem Grundkörper fixiert wird.

Zweckmäßigerweise kann die oder jede Reibschweißverbindung durch aufgleitendes Reibschweißen hergestellt werden, sodass dadurch die zumindest eine Reibschweißverbindung zwischen dem Grundkörper und der Dehnbüchse auf besonders einfache Weise hergestellt werden kann.

Vorteilhafterweise wird nach den Schritten a) bis d) ein aus der vorderen Stirnfläche des Grundkörpers ragender Abschnitt des Dehnbüchsenwerkstücks abgetrennt (Schritt e) ). Somit verbleibt nach dem Abtrennen des überflüssigen Abschnitts des Dehnbüchsenwerkstücks lediglich eine Dehnbüchse, welche unter Bildung einer geschlossenen Druckkammer in den Grundkörper eingesetzt ist.

Gemäß einer bevorzugten Ausführungsform kann es vorgesehen sein, dass ein massiver Dehnbüchsenschaft bereitgestellt wird und in diesem nach Schritt e) eine Aufnahme hergestellt wird. So kann ein bereitgestellter, aus Vollmaterial bestehender Dehnbüchsenschaft mit einer Aufnahme, insbesondere einer Aufnahme mit kreiszylindrischen Querschnitt, versehen werden. Durch das vorherige Abtrennen des überflüssigen Abschnitts des Dehnbüchsenwerkstücks wird die Tiefe der zu fertigenden Aufnahme lediglich auf die Länge der Druckkammer begrenzt. Die Verwendung eines massiven Dehnbüchsenschafts gewährleistet während der Schritte b) bis d) eine gute Kraftübertragung auch hoher axialer Kräfte.

Alternativ kann der bereitgestellte Dehnbüchsenschaft hohl ausgebildet sein, wobei der Dehnbüchsenschaft während der Schritte b) bis d) innenseitig abgestützt wird und/oder nach Schritt e) die Aufnahme an der aus dem Dehnbüchsenschaft gefertigten Dehnbüchse hergestellt wird. Der hohl ausgebildete Dehnbüchsenschaft kann während der Verfahrensschritte b) bis d) gestützt werden, um diesen vor Verformungen infolge der beim Reibschweißen aufgebrachten Kräfte oder anderen Schädigungen zu schützen. Optional kann anschließend an Schritt e) in dem hohl ausgebildetem Dehnbüchsenschaft eine Aufnahme hergestellt und/oder erweitert werden.

In bevorzugter Weise kann das Dehnbüchsenwerkstück mit vorhandener Aufnahme wärmebehandelt werden, insbesondere einsatzgehärtet und/oder vergütet und/oder nitriert werden. Dadurch können dessen Oberflächenhärte und Korrosionsbeständigkeit verbessert werden.

Vorteilhafterweise kann der Dehnbüchsenschaft einen unlegierten Stahl und/oder einen niedrig legierten Stahl und/oder einen hochlegierten Stahl und/oder einen Einsatzstahl, insbesondere 20MnCrS5-Einsatzstahl, und/oder ein Keramikmaterial aufweisen oder daraus bestehen. Ein 20MnCrS5-Einsatzstahl ist relativ kostengünstig und kann mit geringem Aufwand und überschaubarem Verschleiß dazu verwendeter Zerspanungswerkzeuge bearbeitet werden.

Vorzugweise kann die Spannfläche mit einer Oberflächenbeschichtung versehen werden, insbesondere kann die Oberflächenbeschichtung durch Oxidieren oder durch Manganphosphatieren aufgebracht werden. Dadurch kann die Korrosionsbeständigkeit und Verschleißbeständigkeit der Spannfläche und deren Reibwerte verbessert werden.

Schließlich wird die erfindungsgemäße Aufgabe gelöst durch ein Verfahren gemäß dem Anspruch 13 zur Herstellung einer als Spanndorn ausgestalteten Dehnspanneinrichtung mit einem Grundkörper, der eine Längsachse definiert, und einer Dehnbüchse, die unter Bildung wenigstens einer geschlossenen Druckkammer den Grundkörper umgibt und an ihrer Außenfläche eine Spannfläche definiert, auf welche ein zu spannendes Bauteil von der Vorderseite der Dehnspanneinrichtung her aufgeschoben werden kann, aufweisend folgende Schritte:
aa)Bereitstellung eines Grundkörpers, der an seiner vorderen Stirnseite einen zylindrischen Grundkörperschaft aufweist, und eines hohl ausgebildeten Dehnbüchsenwerkstücks, das auf den Grundkörperschaft aufschiebbar ist, wobei in der Außenfläche des Grundkörperschaftes und/oder in der Innenfläche des Dehnbüchsenwerkstücks Vertiefungen zur Bildung der wenigstens einen Druckkammer ausgebildet sind,
bb)Aufschieben des Dehnbüchsenwerkstücks auf den Grundkörperschaft,
cc)Axiales Gegeneinanderdrücken des Grundkörpers und des Dehnbüchsenwerkstücks, während der Grundkörper und/oder das Dehnbüchsenwerkstück Bewegungen um die Längsachse ausführen, insbesondere um die Längsachse rotieren, um eine Relativbewegung zwischen dem Grundkörper und dem Dehnbüchsenwerkstück zu erzeugen, wobei zueinander korrespondierende Anschlagflächen des Grundkörpers und des Dehnbüchsenwerkstücks an dem vorderen axialen Endbereich der wenigstens einen Drucckammer und/oder an dem hinteren axialen Endbereich der wenigstens einen Druckkammer axial gegeneinander gedrückt und durch die Reibung erwärmt werden, so dass das Dehnbüchsenwerkstück an dem Grundkörper im Bereich der Anschlagflächen über eine Reibschweißverbindung stoffschlüssig fixiert wird,
dd)Beendigung der Relativbewegung, so dass der Grundkörper und das Dehnbüchsenwerkstück abkühlen.

Bei dem Verfahren werden der Grundkörper und das Dehnbüchsenwerkstück zunächst axial zueinander ausgerichtet, wozu der Grundkörper und das Dehnbüchsenwerkstück fest in eine Reibschweißmaschine eingespannt werden können. Nun wird das Dehnbüchsenwerkstück durch eine axiale Zustellbewegung auf den Grundkörper aufgeschoben. Insbesondere kann das Dehnbüchsenwerkstück auf den Grundkörper aufgeschoben werden, bis der Grundkörper und das Dehnbüchsenwerkstück an mindestens zwei zueinander korrelierenden, insbesondere umlaufenden Anschlagflächen in Kontakt gebracht werden. Während des Aufschiebens oder anschließend an das Aufschieben werden der Grundkörper und das Dehnbüchsenwerkstück zueinander in Rotation versetzt.

Während der Grundkörper und das Dehnbüchsenwerkstück zueinander in eine Relativrotation versetzt sind, werden das Dehnbüchsenwerkstück und der Grundkörper, insbesondere durch eine Axialkraft, an den korrelierenden Anschlagflächen, aneinandergedrückt. Durch eine erzeugte Reibung werden die Werkstoffe des Grundkörpers und des Dehnbüchsenwerkstücks an den Anschlagflächen erwärmt und Wärme wird in den Grundkörper und das Dehnbüchsenwerkstück eingebracht. Zum stoffschlüssigen Fixierens des Dehnbüchsenwerkstücks an dem Grundkörper wird die Relativrotation des Grundkörpers und des Dehnbüchsenwerkstücks abgebremst, wobei das Dehnbüchsenwerkstück und der Grundkörper optional gegeneinandergedrückt werden, sodass der Grundkörper und/oder das Dehnbüchsenwerkstück unter Bildung einer Schweißwulst gestaucht werden und dabei eine stoffschlüssige Verbindung entsteht.

Dadurch, dass das Dehnbüchsenwerkstück und der Grundkörper während des gesamten Reibschweißvorgangs eingespannt sind, kann eine genaue axiale Ausrichtung der Dehnbüchse zu dem Grundkörper gewährleistet werden. Rückstände von Kühlschmierstoffen oder Korrosionsschutzölen haben in der Regel keinen Einfluss auf die Qualität einer Reibschweißverbindung, sodass das Dehnbüchsenwerkstück und der Grundkörper keinem Reinigungsprozess unterzogen werden müssen, bevor aus diesen durch das angegebene Verfahren eine Dehnspanneinrichtung hergestellt wird.

Durch dieses Verfahren kann die Dehnbüchse mit geringem Aufwand über die Reibschweißverbindung stoffschlüssig an dem Grundkörper fixiert werden und die entstehende Druckkammer zuverlässig abgedichtet werden. Der verfahrensgemäße Schweißprozess kann vollständig automatisiert und in eine Fertigungslinie integriert werden. Die Reibschweißverbindung weist eine hohe Festigkeit auf, die durch die einfache Gestaltung geringeren Schwankungen unterworfen ist, als andere Verbindungsformen aus dem Stand der Technik, beispielsweise eine Lötverbindung.

Vorzugsweise wird das Dehnbüchsenwerkstück nach der Beendigung der Relativbewegung weiter auf den Grundkörperschaft gepresst. Dadurch kann eine beständige Reibschweißverbindung erreicht werden, deren Schweißwulst vollständig in dem benachbarten axialen Endbereich der Druckkammer aufgenommen werden kann.

Gemäß einer bevorzugten Ausführungsform wird das Dehnbüchsenwerkstück in den Schritten aa) bis dd) an seinem vorderen und/oder hinteren Endabschnitt über eine Reibschweißverbindung stoffschlüssig an dem Grundkörperschaft fixiert, sodass das Dehnbüchsenwerkstück den Grundkörperschaft unter Bildung einer einzigen, sich ringförmig um die Längsachse erstreckenden Druckkammer umgibt. Bei diesem Verfahren wird ein Spanndorn mit lediglich einer ringförmig umlaufenden Druckkammer hergestellt, welche sich über nahezu die gesamte Länge der Dehnbüchse erstreckt, und an zumindest einem ihrer Endabschnitte durch eine Reibschweißverbindung begrenzt ist. An dem anderen Endabschnitt kann die Druckkammer durch ein Abdichtungsmittel, beispielsweise durch einen O-Ring, abgedichtet werden. In bevorzugter Weise kann die Druckkammer an ihren beiden Endabschnitten durch jeweils eine Reibschweißverbindung begrenzt und abgedichtet werden, wodurch eine besonders zuverlässige Abdichtung der Druckkammer erfolgt.

Alternativ wird in den Schritten aa) bis dd) das Dehnbüchsenwerkstück über eine Reibschweißverbindung stoffschlüssig an dem Grundkörperschaft fixiert, wobei das Dehnbüchsenwerkstück den Grundkörperschaft unter Bildung zweier, axial hintereinanderliegender, sich ringförmig um die Längsachse erstreckender Druckkammern umgibt. Dadurch kann ein Spanndorn mit zwei axial hintereinanderliegenden Druckkammern hergestellt werden, welcher durch diese ein verbessertes Greifen und eine genauere axiale Ausrichtung des zu spannenden Werkstückes ermöglicht.

In bevorzugter Weise wird das Dehnbüchsenwerkstück axial zwischen den Druckkammern stoffschlüssig an dem Grundkörperschaft fixiert. Weiter bevorzugt können in Schritt cc) die jeweiligen zueinander korrespondierenden Anschlagflächen des Grundkörpers und des Dehnbüchsenwerkstücks an dem vorderen axialen Endbereich der vorderen Druckkammer und/oder an dem hinteren axialen Endbereich der hinteren Druckkammer ausgebildet sein. Besonders bevorzugt können die jeweiligen zueinander korrespondierenden Anschlagflächen an dem vorderen axialen Endbereich der vorderen Druckkammer und an dem hinteren axialen Endbereich der hinteren Drucckammer ausgebildet sein, sodass das Dehnbüchsenwerkstück an diesen stoffschlüssig an dem Grundkörper fixiert wird. Über die Reibschweißverbindungen können der vordere Endbereich der vorderen Druckkammer und der hintere Endbereich der hinteren Druckkammer abgegrenzt und auf besonders zuverlässige Weise abgedichtet werden. Der Bereich zwischen den zwei Druckkammern kann durch ein Abdichtungsmittel, beispielsweise durch einen O-Ring, abgedichtet werden.

Alternativ kann vorgesehen sein, dass in Schritt cc) lediglich zwei zueinander korrespondierende Anschlagflächen des Grundkörpers und des Dehnbüchsenwerkstücks in dem Bereich zwischen den beiden Druckkammern ausgebildet sind und der Grundkörper und das Dehnbüchsenwerkzeug an diesen stoffschlüssig fixiert werden. Dabei wird das Dehnbüchsenwerkstück über eine einzige, axial zwischen den Druckkammern gelegene, Reibschweißverbindung an dem Grundkörper fixiert. Der Bereich zwischen den beiden Druckkammern wird durch die Reibschweißverbindung auf besonders zuverlässige Weise abgedichtet, während das vordere Ende der vorderen und das hintere Ende der hinteren Druckkammer durch Abdichtungsmittel, beispielsweise durch O-Ringe, abgedichtet werden können.

Zweckmäßigerweise kann die oder jede Reibschweißverbindung durch aufgleitendes Reibschweißen hergestellt werden. Dadurch kann die zumindest eine Verbindung zwischen dem Grundkörper und der Dehnbüchse auf besonders einfache Weise hergestellt werden.

Vorzugsweise wird nach den Schritten aa) bis dd) ein über die vordere Stirnfläche des Grundkörpers ragender Abschnitt des Dehnbüchsenwerkstücks abgetrennt (Schritt ee) ). Somit verbleibt nach dem Abtrennen des überflüssigen Bereichs des Dehnbüchsenwerkstücks lediglich eine Dehnbüchse, welche den Grundkörper unter Bildung einer geschlossenen Druckkammer umgibt.

Vorteilhafterweise wird nach dem Schritt ee) zumindest ein Teil der äußeren Mantelfläche der an dem Grundkörper fixierten Dehnbüchse bearbeitet, wobei insbesondere eine beim Erstellen der Reibschweißverbindung erzeugte Schweißwulst abgetragen wird und/oder eine Spannfläche hergestellt wird. Durch das zuvor erfolgte Abtrennen des überflüssigen Abschnitts des Dehnbüchsenwerkstücks in Schritt ee) wird lediglich die Mantelfläche der Dehnbüchse, nicht jedoch die des gesamten Dehnbüchsenwerkstücks bearbeitet. Somit wird eine einfache Herstellung der Spannfläche erreicht.

Nach einer bevorzugten Ausführungsform kann das Dehnbüchsenwerkstück mit vorhandener Spannfläche wärmebehandelt, insbesondere einsatzgehärtet und/oder vergütet und/oder nitriert werden. Dadurch können dessen Oberflächenhärte und Korrosionsbeständigkeit und insbesondere die Oberflächenhärte und Korrosionsbeständigkeit der Spannfläche verbessert werden.

Vorzugsweise kann das Dehnbüchsenwerkstück einen unlegierten Stahl und/oder einen niedrig legierten Stahl und/oder einen hochlegierten Stahl und/oder ein Keramikmaterial und/oder einen Einsatzstahl, insbesondere einen 20MnCrS5-Einsatzstahl, aufweisen oder daraus bestehen. Dieser ist kostengünstig und kann mit geringem Aufwand und überschaubarem Verschleiß dazu verwendeter Zerspanungswerkzeuge bearbeitet werden. Dadurch können beispielsweise das Abtrennen des über die vordere Stirnfläche des Grundkörpers ragenden Abschnitts des Dehnbüchsenwerkstücks und das Herstellen der Spannfläche mit geringem Aufwand und überschaubarem Verschleiß der Zerspanungswerkzeuge erfolgen.

Zweckmäßigerweise kann die Spannfläche mit einer Oberflächenbeschichtung versehen werden. In besonders bevorzugter Weise kann die Oberflächenbeschichtung durch Oxidieren oder durch Manganphosphatieren aufgebracht werden. Dadurch können die Korrosionsbeständigkeit und Verschleißbeständigkeit der Spannfläche verbessert und deren Reibwerte verbessert werden.

Hinsichtlich weiterer Ausgestaltungen der vorliegenden Erfindung wird auf die nachfolgenden Ausführungsbeispiele unter Bezugnahme auf die beiliegenden Zeichnungen verwiesen. In den Zeichnungen zeigen:
- Figur 1: eine Längsschnittansicht einer Dehnspanneinrichtung gemäß einer Ausführungsform der vorliegenden Erfindung;
- Figur 2: ein Längsschnittansicht eines axialen Endbereiches der zwischen dem Grundkörper und der Dehnbüchse gebildeten Druckkammer aus Figur 1;
- Figur 3: ein Längsschnittansicht des anderen axialen Endbereichs der Druckkammer aus Figur 1;
- Figur 4: eine weitere Längsschnittansicht der Dehnspanneinrichtung aus Figur 1;
- Figur 5: eine Längsschnittansicht einer zweiten Ausführungsform einer Dehnspanneinrichtung gemäß der vorliegenden Erfindung;
- Figur 6: eine Längsschnittansicht eines Grundkörpers zum Herstellen der Dehnspanneinrichtung aus Figur 1;
- Figur 7: eine Längsschnittansicht eines Dehnbüchsenwerkstücks zum Herstellen der Dehnspanneinrichtung aus Figur 1;
- Figur 8: eine Seitenansicht des Dehnbüchsenwerkstücks aus Figur 7;
- Figur 9: eine Längsschnittansicht des Grundkörpers aus Figur 6 und des in eine Axialbohrung des Grundkörpers eingeschobenen Dehnbüchsenwerkstücks aus Figur 7.

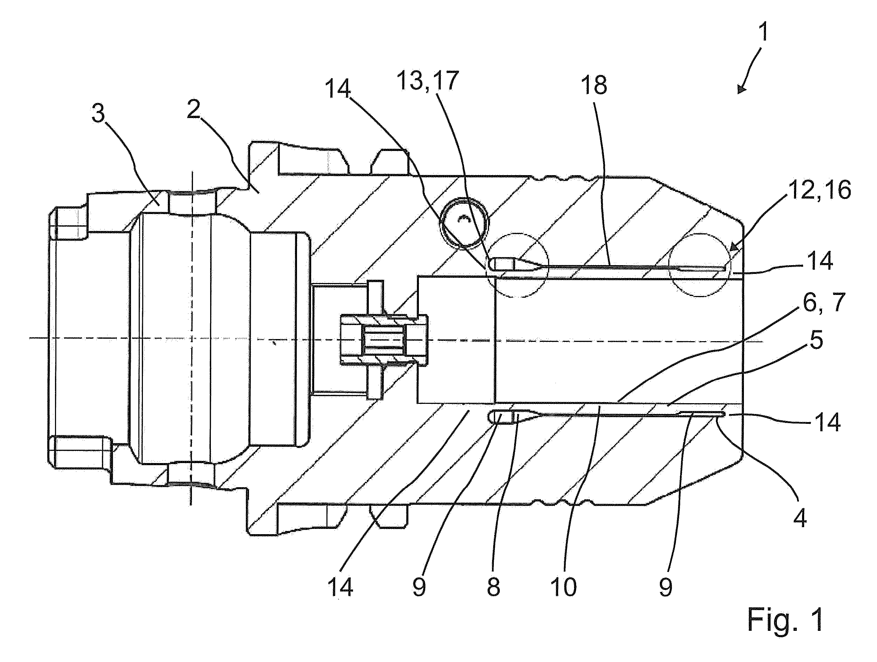

In der Figur 1 ist eine Ausführungsform einer als Dehnspannfutter 1 ausgebildeten Dehnspanneinrichtung gemäß der vorliegenden Erfindung dargestellt. Das Dehnspannfutter 1 ist als Hohlschaftkegelwerkzeughalter (HSK) ausgebildet und umfasst einen Grundkörper 2 aus einem 20MnCrS5-Einsatzstahl, der an seinem linksseitigen Endbereich in an sich bekannter Weise einen Befestigungskonus 3 zur Einspannung an einer drehangetriebenen Arbeitsspindel einer Werkzeugmaschine aufweist. An dem gegenüberliegenden Endbereich des Grundkörpers 2 ist eine Axialbohrung 4 vorgesehen, in die eine Dehnbüchse 5 eingesetzt ist. Die Dehnbüchse 5 bildet dabei eine Aufnahme 6, in die ein zylindrischer Schaft eines Werkzeugs wie beispielsweise eines Bohrers oder Fräsers eingeschoben werden kann, wobei die Innenfläche der Dehnbüchse 5 eine Spannfläche 7 bildet.

Zwischen der Dehnbüchse 5 und dem Grundkörper 2 ist eine Druckkammer 8 ausgebildet, welche die Aufnahme 6 umgibt und koaxial zu dieser ausgerichtet ist. Die Druckkammer 8, deren axiale Länge etwa der Länge der Spannfläche 7 entspricht, wird durch ringartige Ausnehmungen 9 in der Mantelfläche der Dehnbüchse 5 und in der Innenfläche der Axialbohrung 4 des Grundkörpers 2 gebildet.

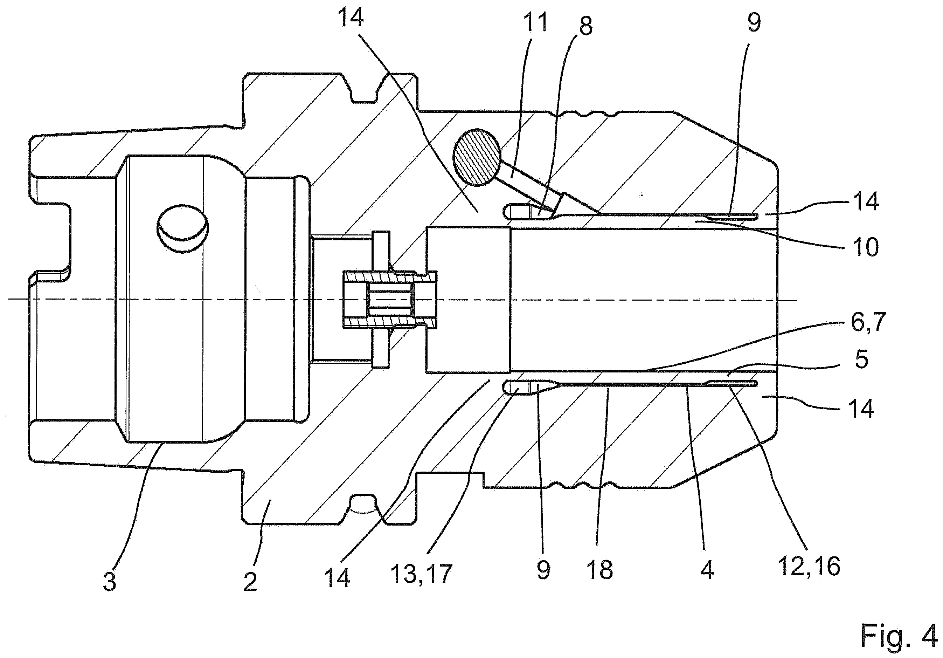

Zur Aufnahme 6 hin wird die Druckkammer 8 von einer relativ schmalen Innenwand 10 der Dehnbüchse 5 und radial nach außen von der Wandung des Grundkörpers 2, deren Wandstärke um ein mehrfaches größer ist als die Wandstärke der Innenwand 10, begrenzt. Die Druckkammer 8 ist mit einem Hydraulikmittel wie beispielsweise Öl gefüllt und ist über einen Hydraulikmittelzuführkanal 11 mit einem Spannmittel wirkverbunden, so dass über die Spannmittel wahlweise eine Druckerhöhung in dem Hydraulikmittel bewirkt werden kann. Wie in der Figur 4 erkennbar ist, steht die Druckkammer 8 über einen in dem Grundkörper 2 ausgebildeten Hydraulikmittelzufuhrkanal 11 mit einer Hydraulikmittelquelle in Verbindung, durch welche sie zum Spannen eines Werkzeugs mit Druck beaufschlagt werden kann. Die Druckmittelquelle kann in an sich bekannter Weise von einem im Grundkörper 2 ausgebildeten Zylinderraum gebildet sein, der endseitig durch ein kolbenartiges Stellorgan verschlossen ist, das zur Erhöhung des Drucks in dem Zylinderraum eingeschraubt, bzw. zur Verringerung des Drucks aus diesem herausgeschraubt werden kann. Der hydraulische Druck wird über den Hydraulikmittelzufuhrkanal 11 zur Druckkammer 8 übertragen und bewirkt eine elastische Auswölbung der Innenwand 10 radial nach innen, bis diese einen in die Aufnahme 6 eingesetzten Werkzeugschaft kraftschlüssig umschließt.

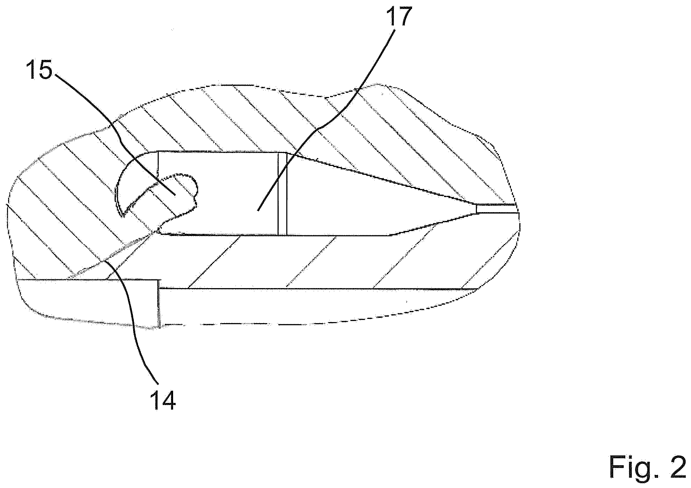

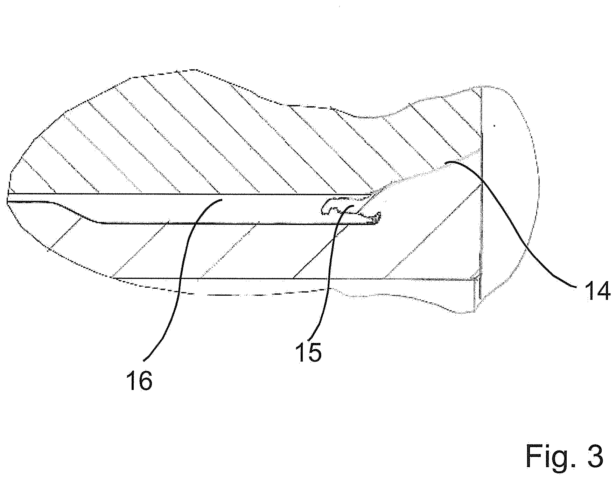

In den Figuren 2 und 3 ist erkennbar, dass die Dehnbüchse 5 an ihrem vorderen axialen Endabschnitt 12 und an ihrem hinteren axialen Endabschnitt 13 über jeweils eine Reibschweißverbindung 14 stoffschlüssig an dem Grundkörper 2 fixiert ist. Um die beim Erstellen der jeweiligen Reibschweißverbindung 14 erzeugte Schweißwulst 15 aufzunehmen, ist die Druckkammer 8 in ihrem vorderen axialen Endbereich 16 und in ihrem hinteren axialen Endbereich 17 in radialer Richtung gegenüber einem in axialer Richtung zentralen Bereich 18 der Druckkammer 8 verbreitert.

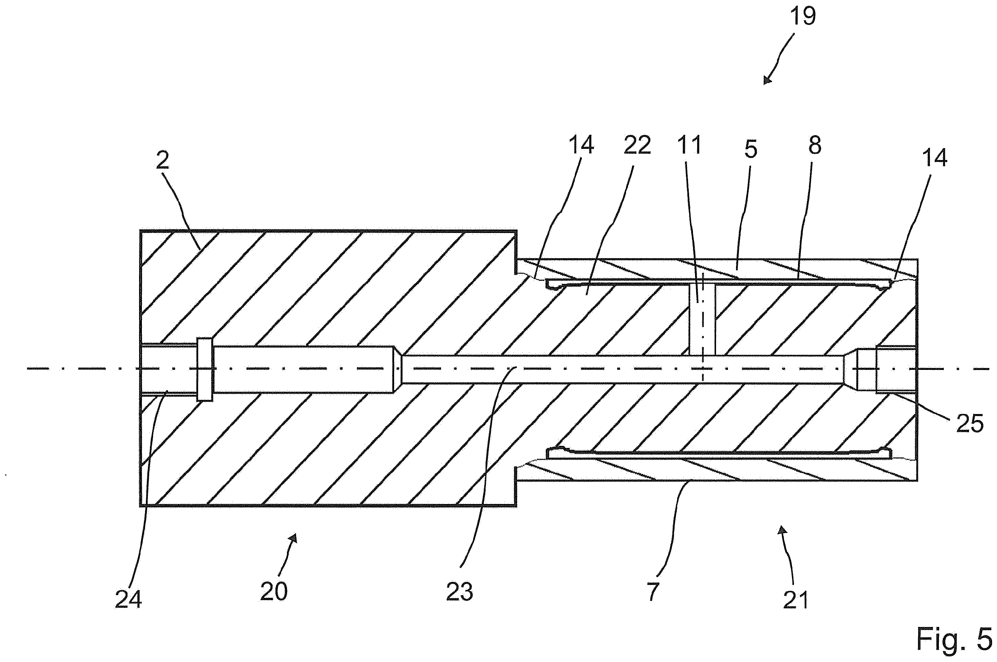

In Figur 5 ist eine als Spanndorn 19 ausgebildete Dehnspanneinrichtung gemäß der vorliegenden Erfindung dargestellt. Der Spanndorn 19 ist dazu vorgesehen, ein Bauteil von innen zu spannen und besitzt einen Grundkörper 2, der an seinem links dargestellten Endbereich 20 in einer Arbeitsspindel einer Arbeitsmaschine einspannbar ist. An seinem rechts dargestellten Endbereich 21 weist der Grundkörper 2 einen Grundkörperschaft 22 auf, welcher radial außenseitig eine Dehnbüchse 5 trägt, die über zwei Reibschweißverbindungen 14 stoffschlüssig an diesem fixiert ist.

Der Grundkörper 2 und die Dehnbüchse 5 sind in Figur 5 unterschiedlich schraffiert dargestellt. Im Gegensatz zu der aus Dehnspannfutter 1 ausgestalteten Dehnspanneinrichtung aus den Figuren 1 bis 4 umgibt die Dehnbüchse 5 den Grundkörper 2 unter Bildung einer Druckkammer 8, und die Außenfläche der Dehnbüchse 5 bildet eine Spannfläche 7, auf die ein zu spannendes Bauteil aufgeschoben werden kann.

Die Druckkammer 8 steht mit einem zentral im Grundkörper 2 ausgebildeten Hydraulikmittelkanal 23, welcher den Grundkörper 2 axial durchsetzt, über einen Hydraulikmittelzufuhrkanal 11 in Verbindung. Der Hydraulikmittelkanal 23 ist an seinen Endbereichen mit Gewindebohrungen 24, 25 versehen, die durch nicht dargestellte Spannschrauben verschlossen sind. Um ein Bauteil zu spannen, wird eine dieser Spannschrauben in das Grundkörperinnere geschraubt, wodurch sich der hydraulische Druck innerhalb des Hydraulikmittelkanals 23, des Hydraulikmittelzufuhrkanals 11 sowie der Druckkammer 8 erhöht und auf diese Weise die Dehnbüchse 5 elastisch nach außen verformt wird, um ein aufgeschobenes Bauteil kraftschlüssig zu fixieren.

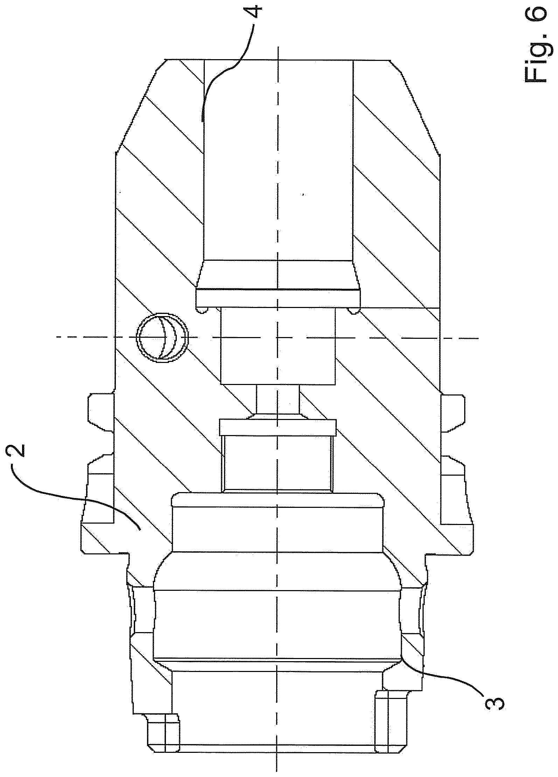

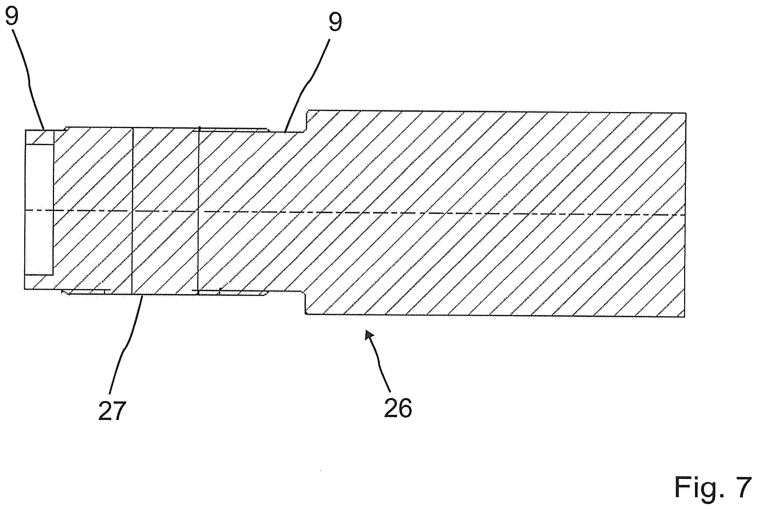

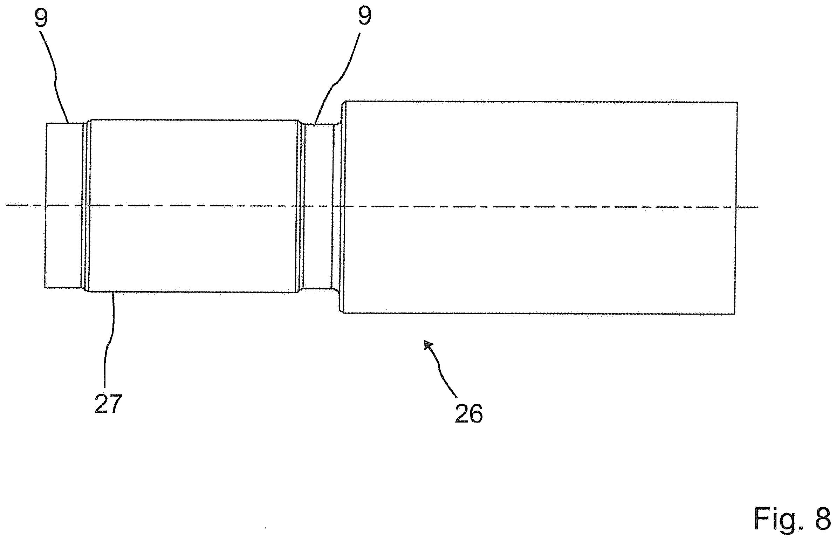

Die Figuren 6 bis 9 verdeutlichen ein Verfahren zur Herstellung der als Dehnspannfutter 1 ausgebildeten Dehnspanneinrichtung, wie sie in den Figuren 1 bis 4 dargestellt ist. Dabei werden der Grundkörper 2, wie in Figur 6 dargestellt, und ein Dehnbüchsenwerkstück 26, wie in den Figuren 7 und 8 gezeigt, bereitgestellt. Der Grundkörper 2 weist eine zu dessen vorderer Stirnseite hin offene, zentrale Axialbohrung 4 auf. Das Dehnbüchsenwerkstück 27 weist eine zylindrische Grundform und ist massiv aus Vollmaterial ausgestaltet. Des Weiteren ist das Dehnbüchsenwerkstück 27 mit einem in die Axialbohrung 4 des Grundkörpers 2 einschiebbaren Dehnbüchsenschaft 27 versehen, wobei in der äußeren Mantelfläche des Dehnbüchsenschafts 27 und/oder der die zentrale Axialbohrung 4 definierenden Innenfläche des Grundkörpers 2 Vertiefungen in der Form von ringartigen Ausnehmungen 9 zur Bildung der Druckkammer 8 ausgebildet sind.

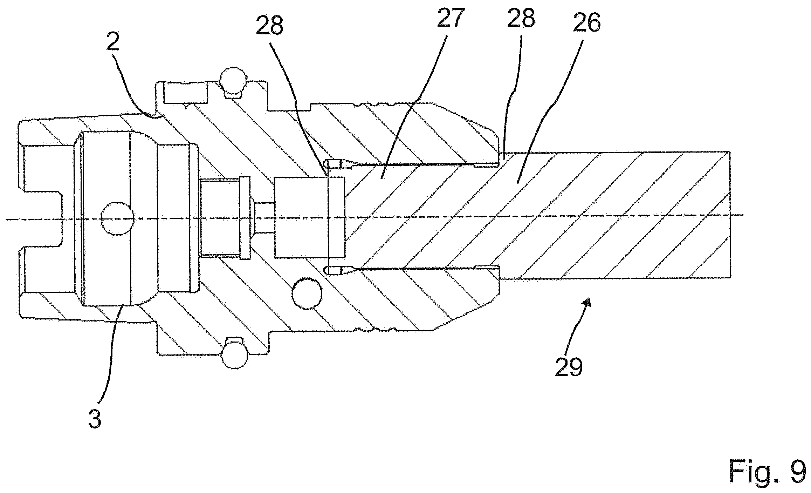

In Figur 9 ist der Grundkörper 2 mit dem eingeschobenen Dehnbüchsenschaft 27 eines Dehnbüchsenwerkstücks 26 dargestellt. Bei dem Verfahren zur Herstellung einer als Dehnspannfutter 1 ausgestalteten Dehnspanneinrichtung wird der Dehnbüchsenschaft 27 bis zum Kontakt zweier jeweiliger Paare zueinander korrelierender Anschlagflächen 28 des Grundkörpers 2 und des Dehnbüchsenwerkstücks 26 an den vorderen und hinteren axialen Endbereichen 16, 17 der Druckkammer 8 in den Grundkörper 2 eingeschoben.

Anschließend werden der Grundkörper 2 und das Dehnbüchsenwerkstück 26, während diese in eine Relativrotation versetzt sind, an den zwei jeweiligen Paaren zueinander korrelierender Anschlagflächen 28 aneinandergedrückt. Dabei entsteht Reibung, durch welche die Werkstoffe des Grundkörpers 2 und des Dehnbüchsenwerkstücks 26 im Bereich der Anschlagflächen 28 erwärmt werden. Zum stoffschlüssigen Verbinden des Dehnbüchsenwerkstücks 26 und des Grundkörpers 2 wird die Relativrotation abgebremst und der Grundkörper 2 und das Dehnbüchsenwerkstück 26 werden gegeneinandergedrückt, wobei diese unter Bildung einer Schweißwulst 15 gestaucht werden. Dabei wird das Dehnbüchsenwerkstück 26 noch weiter in den Grundkörper 2 eingedrückt.

Nachdem das Dehnbüchsenwerkstück 26 über die beiden Reibschweißverbindungen 14 an dem Grundkörper 2 fixiert wurde, kann ein aus der vorderen Stirnfläche des Grundkörpers 2 ragender Abschnitt 29 des Dehnbüchsenwerkstücks 26 abgetrennt werden, so dass lediglich eine Dehnbüchse 5 verbleibt. Anschließend kann in dem Dehnbüchsenwerkstück 26, beispielsweise mittels Bohren, eine Aufnahme 6 mit einem kreiszylindrischen Querschnitt hergestellt werden.

Obwohl die Erfindung im Detail durch bevorzugte Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Dehnspannfutter
- 2: Grundkörper
- 3: Befestigungskonus
- 4: Axialbohrung
- 5: Dehnbüchse
- 6: Aufnahme
- 7: Spannfläche
- 8: Druckkammer
- 9: ringartige Ausnehmungen
- 10: Innenwand der Dehnbüchse
- 11: Hydraulikmittelzufuhrkanal
- 12: vorderer axialer Endabschnitt
- 13: hinterer axialer Endabschnitt
- 14: Reibschweißverbindung
- 15: Schweißwulst
- 16: vorderer axialer Endbereich
- 17: hinterer axialer Endbereich
- 18: in axialer Richtung zentraler Bereich
- 19: Spanndorn
- 20: links dargestellter Endbereich
- 21: rechts dargestellter Endbereich
- 22: Grundkörperschaft
- 23: Hydraulikmittelkanal
- 24: hintere Gewindebohrung
- 25: vordere Gewindebohrung
- 26: Dehnbüchsenwerkstück
- 27: Dehnbüchsenschaft
- 28: Anschlagflächen
- 29: Abschnitt

## Patentansprüche

1. Dehnspanneinrichtung mit einem Grundkörper (2), der eine Längsachse definiert, und einer Dehnbüchse (5), die unter Bildung wenigstens einer Druckkammer (8) in den Grundkörper (2) eingesetzt ist oder diesen umgibt, wobei die Druckkammer (8) unter elastischer Verformung der Dehnbüchse (5) mit einem Hydraulikmittel beaufschlagbar ist, um eine Spannwirkung zu erzielen, **dadurch gekennzeichnet, dass** die Dehnbüchse (5) an dem vorderen axialen Endbereich (16) der Druckkammer (8) und/oder an dem hinteren axialen Endbereich (17) der Druckkammer (8) über eine Reibschweißverbindung (14) an dem Grundkörper (2) stoffschlüssig fixiert ist.

2. Dehnspanneinrichtung nach Anspruch 1, **dadurch gekennzeichnet, dass** die Druckkammer (8) in ihrem zu einer Reibschweißverbindung (14) benachbarten vorderen und/oder hinteren axialen Endbereich (16, 17) eine beim Erstellen der Reibschweißverbindung (14) erzeugte Schweißwulst (15) aufnimmt und hier insbesondere in radialer Richtung gegenüber einem in axialer Richtung zentralen Bereich (18) der Druckkammer (8) verbreitert ist.

3. Dehnspanneinrichtung nach Anspruch 1 oder 2, **dadurch gekennzeichnet, dass** die Dehnbüchse (5) unter Bildung einer einzigen, sich ringförmig um die Längsachse erstreckenden Druckkammer (8) in den Grundkörper (2) eingesetzt ist oder diesen umgibt und die Dehnbüchse (5) an ihrem vorderen und/oder hinteren Endabschnitt (12, 13) an dem Grundkörper (2) über eine Reibschweißverbindung (14) stoffschlüssig fixiert ist.

4. Dehnspanneinrichtung nach einem der vorherigen Ansprüche, **dadurch gekennzeichnet, dass** die Dehnbüchse (5) unter Bildung von zwei axial hintereinanderliegenden Druckkammern (8) in den Grundkörper (2) eingesetzt ist oder diesen umgibt, wobei insbesondere die Dehnbüchse (5) axial zwischen den Druckkammern (8) über eine Reibschweißverbindung (14) an dem Grundkörper (2) stoffschlüssig fixiert ist und/oder wobei insbesondere die Dehnbüchse (5) an dem hinteren axialen Endbereich (17) der hinteren Druckkammer (8) und/oder an dem vorderen axialen Endbereich (16) der vorderen Druckkammer (8) an dem Grundkörper (2) über eine Reibschweißverbindung (14) stoffschlüssig fixiert ist.

5. Dehnspanneinrichtung nach einem der vorhergehenden Ansprüche, **dadurch gekennzeichnet, dass** die oder jede Reibschweißverbindung (14) durch aufgleitendes Reibschweißen hergestellt ist und/oder dass die oder jede Reibschweißverbindung (14) durch ein Rotationsschweißverfahren hergestellt ist, und/oder
dass die Dehnbüchse (5) wärmebehandelt, insbesondere einsatzgehärtet und/oder vergütet und/oder nitriert ist, und/oder
dass die Dehnbüchse (5) einen unlegierten Stahl und/oder einen niedrig legierten Stahl und/oder einen hochlegierten Stahl und/oder ein Keramikmaterial und/oder einen Einsatzstahl, insbesondere einen 20MnCrS5-Einsatzstahl, aufweist oder daraus besteht.

6. Dehnspanneinrichtung nach einem der vorhergehenden Ansprüche, **dadurch gekennzeichnet, dass** die Dehnbüchse (5) in den Grundkörper (2) eingesetzt ist und die Innenfläche der Dehnbüchse (5) eine Spannfläche (7) bildet, wobei die Spannfläche (7) mit einer Oberflächenbeschichtung versehen ist, oder dass die Dehnbüchse (5) den Grundkörper (2) umgibt und die Außenfläche der Dehnbüchse (5) eine Spannfläche (7) bildet, wobei die Spannfläche (7) mit einer Oberflächenbeschichtung versehen ist, wobei insbesondere die Oberflächenbeschichtung durch Oxidieren oder durch Manganphosphatierung aufgebracht ist.

7. Dehnspanneinrichtung nach einem der vorhergehenden Ansprüche, **dadurch gekennzeichnet, dass** die Dehnspanneinrichtung Spannmittel aufweist, die ausgebildet sind, wahlweise eine Druckerhöhung in dem Hydraulikmittel zu bewirken, wobei die Spannmittel über einen Hydraulikmittelzuführkanal (23) mit der Druckkammer (8) wirkverbunden sind.

8. Verfahren zur Herstellung einer als Dehnspannfutter (1) ausgestalteten Dehnspanneinrichtung mit einem Grundkörper (2), der eine Längsachse definiert, und einer Dehnbüchse (5), die unter Bildung wenigstens einer geschlossenen Druckkammer (8) in den Grundkörper (2) eingesetzt ist und eine zentrale Aufnahme zylindrischer Grundform mit einer Spannfläche (7) definiert, in welche ein zu spannendes Bauteil von der Vorderseite der Dehnspanneinrichtung her eingeschoben werden kann, aufweisend folgende Schritte:
a) Bereitstellung eines Grundkörpers (2), der eine zur vorderen Stirnseite des Grundkörpers (2) offene zentrale Axialbohrung (4) aufweist, und eines Dehnbüchsenwerkstücks (26), das einen in die zentrale Axialbohrung (4) des Grundkörpers (2) einschiebbaren Dehnbüchsenschaft (27) zylindrischer Grundform aufweist, wobei in der Außenfläche des Dehnbüchsenschafts (27) und/oder in der die zentrale Axialbohrung (4) definierenden Innenfläche des Grundkörpers (2) Vertiefungen zur Bildung der wenigstens einen Druckkammer (8) ausgebildet sind,
b) Einschieben des Dehnbüchsenschaftes (27) in die zentrale Axialbohrung (4) des Grundkörpers (2),
wobei das Verfahren durch die folgenden Schritte gekennzeichnet ist:
c) Axiales Gegeneinanderdrücken des Grundkörpers (2) und des Dehnbüchsenwerkstücks (26), während der Grundkörper (2) und/oder das Dehnbüchsenwerkstück (26) Bewegungen um die Längsachse ausführen, insbesondere um die Längsachse rotieren, um eine Relativbewegung zwischen dem Grundkörper (2) und dem Dehnbüchsenwerkstück (26) zu erzeugen, wobei zueinander korrespondierende Anschlagflächen (28) des Grundkörpers (2) und des Dehnbüchsenwerkstücks (26) an dem vorderen axialen Endbereich (16) der wenigstens einen Druckkammer (8) und/oder an dem hinteren axialen Endbereich (17) der wenigstens einen Druckkammer (8) axial gegeneinander gedrückt und durch die Reibung erwärmt werden, so dass das Dehnbüchsenwerkstück (26) an dem Grundkörper (2) im Bereich der Anschlagflächen (28) über eine Reibschweißverbindung (14) stoffschlüssig fixiert wird,
d) Beendigung der Relativbewegung, so dass der Grundkörper (2) und das Dehnbüchsenwerkstück (26) abkühlen,
wobei insbesondere das Dehnbüchsenwerkstück (26) nach der Beendigung der Relativbewegung weiter in den Grundkörper (2) eingepresst wird.

9. Verfahren nach Anspruch 8, **dadurch gekennzeichnet, dass** in den Schritten a) bis d) der Dehnbüchsenschaft (27) unter Bildung einer einzigen, sich ringförmig um die Längsachse erstreckenden Druckkammer (8) in den Grundkörper (2) eingesetzt wird und der Dehnbüchsenschaft (27) an seinem vorderen und/oder hinterem Endabschnitt (12, 13) an dem Grundkörper (2) über eine Reibschweißverbindung (14) stoffschlüssig fixiert wird, und/oder
dass in den Schritten a) bis d) der Dehnbüchsenschaft (27) unter Bildung zweier, axial hintereinanderliegender, sich ringförmig um die Längsachse erstreckender Druckkammern (8), in den Grundkörper (2) eingesetzt wird, und der Dehnbüchsenschaft (27) insbesondere axial zwischen den Drucckammern (8) über eine Reibschweißverbindung (14) an dem Grundkörper (2) stoffschlüssig fixiert wird, wobei insbesondere in Schritt c) die jeweiligen zueinander korrespondierenden Anschlagflächen (28) des Grundkörpers (2) und des Dehnbüchsenwerkstücks (26) an dem vorderen axialen Endbereich (16) der vorderen Druckkammer (8) und/oder an dem hinteren axialen Endbereich (17) der hinteren Druckkammer (8) ausgebildet sind.

10. Verfahren nach Anspruch 8 oder 9, **dadurch gekennzeichnet, dass** die oder jede Reibschweißverbindung (14) durch aufgleitendes Reibschweißen hergestellt wird, und/oder
dass nach den Schritten a) bis d) folgender weiterer Schritt durchgeführt wird:
e) ein aus der vorderen Stirnfläche des Grundkörpers (2) ragender Abschnitt (29) des Dehnbüchsenwerkstücks (26) wird abgetrennt.

11. Verfahren nach einem der Ansprüche 8 bis 10, **dadurch gekennzeichnet, dass** ein massiver Dehnbüchsenschaft (27) bereitgestellt wird und in diesem, insbesondere nach Schritt e), eine Aufnahme (6) hergestellt wird, und/oder
dass der in Schritt a) bereitgestellte Dehnbüchsenschaft (27) hohl ausgebildet ist, wobei der Dehnbüchsenschaft (27) während den Schritten b) bis d) innenseitig abgestützt wird und/oder nach Schritt e) eine Aufnahme (6) an dem Dehnbüchsenschaft (27) hergestellt wird, wobei insbesondere der Dehnbüchsenschaft (27) mit vorhandener Aufnahme (6) wärmebehandelt wird, insbesondere einsatzgehärtet und/oder vergütet und/oder nitriert wird.

12. Verfahren nach einem der Ansprüche 8 bis 11, **dadurch gekennzeichnet, dass** der Dehnbüchsenschaft (26) einen unlegierten Stahl und/oder einen niedrig legierten Stahl und/oder einen hochlegierten Stahl und/oder ein Keramikmaterial und/oder einen Einsatzstahl, insbesondere 20MnCrS5-Einsatzstahl, aufweist oder daraus besteht, und/oder dass die Spannfläche (7) mit einer insbesondere durch Oxidieren oder durch Manganphosphatieren aufgebrachten Oberflächenbeschichtung versehen wird.

13. Verfahren zur Herstellung einer als Spanndorn (19) ausgestalteten Dehnspanneinrichtung mit einem Grundkörper (2), der eine Längsachse definiert, und einer Dehnbüchse, die unter Bildung wenigstens einer geschlossenen Druckkammer (8) den Grundkörper (2) umgibt und an ihrer Außenfläche eine Spannfläche (7) definiert, auf welche ein zu spannendes Bauteil von der Vorderseite der Dehnspanneinrichtung her aufgeschoben werden kann, aufweisend folgende Schritte:
aa)Bereitstellung eines Grundkörpers (2), der an seiner vorderen Stirnseite einen zylindrischen Grundkörperschaft (22) aufweist, und eines hohl ausgebildeten Dehnbüchsenwerkstücks (26), das auf den Grundkörperschaft (22) aufschiebbar ist, wobei in der Außenfläche des Grundkörperschaftes (22) und/oder in der Innenfläche des Dehnbüchsenwerkstücks (26) Vertiefungen zur Bildung der wenigstens einen Druckkammer (8) ausgebildet sind,
bb)Aufschieben des Dehnbüchsenwerkstücks (26) auf den Grundkörperschaft (22),
wobei das Verfahren durch die folgenden Schritte gekennzeichnet ist:
cc)Axiales Gegeneinanderdrücken des Grundkörpers (2) und des Dehnbüchsenwerkstücks (26), während der Grundkörper (2) und/oder das Dehnbüchsenwerkstück (26) Bewegungen um die Längsachse ausführen, insbesondere um die Längsachse rotieren, um eine Relativbewegung zwischen dem Grundkörper und dem Dehnbüchsenwerkstück (26) zu erzeugen, wobei zueinander korrespondierende Anschlagflächen (28) des Grundkörpers (2) und des Dehnbüchsenwerkstücks (26) an dem vorderen axialen Endbereich (16) der wenigstens einen Druckkammer (8) und/oder an dem hinteren axialen Endbereich (17) der wenigstens einen Druckkammer (8) axial gegeneinander gedrückt und durch die Reibung erwärmt werden, so dass das Dehnbüchsenwerkstück (26) an dem Grundkörper (2) im Bereich der Anschlagflächen (28) über eine Reibschweißverbindung (14) stoffschlüssig fixiert wird,
dd)Beendigung der Relativbewegung, so dass der Grundkörper (2) und das Dehnbüchsenwerkstück (26) abkühlen,
wobei insbesondere das Dehnbüchsenwerkstück (26) nach der Beendigung der Relativbewegung weiter auf den Grundkörperschaft (22) gepresst wird.

14. Verfahren nach Anspruch 13, **dadurch gekennzeichnet, dass** in den Schritten aa) bis dd) das Dehnbüchsenwerkstück (26) den Grundkörperschaft (22) unter Bildung einer einzigen, sich ringförmig um die Längsachse erstreckenden Druckkammer (8) umgibt und das Dehnbüchsenwerkstück (26) an seinem vorderen und/oder hinterem Endabschnitt (16, 17) an dem Grundkörperschaft (22) über eine Reibschweißverbindung (14) stoffschlüssig fixiert wird, oder
dass in den Schritten aa) bis dd) das Dehnbüchsenwerkstück (26) den Grundkörperschaft (22) unter Bildung zweier, axial hintereinanderliegender, sich ringförmig um die Längsachse erstreckender Druckkammern (8) umgibt, und das Dehnbüchsenwerkstück (26) insbesondere axial zwischen den Druckkammern (8) über eine Reibschweißverbindung (14) an dem Grundkörperschaft (22) stoffschlüssig fixiert wird, wobei insbesondere in Schritt cc) die jeweiligen zueinander korrespondierenden Anschlagflächen (28) des Grundkörpers (2) und des Dehnbüchsenwerkstücks (26) an dem vorderen axialen Endbereich (16) der vorderen Druckkammer (8) und/oder an dem hinteren axialen Endbereich (17) der hinteren Druckkammer (8) ausgebildet sind.

15. Verfahren nach Anspruch 13 oder 14, **dadurch gekennzeichnet, dass** die oder jede Reibschweißverbindung (14) durch aufgleitendes Reibschwei-ßen hergestellt wird, und/oder
dass nach den Schritten aa) bis dd) folgender weiterer Schritt durchgeführt wird:
ee)ein über die vordere Stirnfläche des Grundkörpers (2) ragender Abschnitt (29) des Dehnbüchsenwerkstücks (26) wird abgetrennt, und/oder
dass, insbesondere nach dem Schritt ee), zumindest ein Teil der äußeren Mantelfläche des an dem Grundkörper fixierten Dehnbüchsenwerkstücks (26) bearbeitet wird, wobei insbesondere eine beim Erstellen der Reibschweißverbindung (14) erzeugte Schweißwulst (15) abgetragen wird und/oder die Spannfläche (7) hergestellt wird, und/oder
dass das Dehnbüchsenwerkstück (26) mit vorhandener Spannfläche (7) wärmebehandelt wird, insbesondere einsatzgehärtet und/oder vergütet und/oder nitriert wird, und/oder
dass ein Dehnbüchsenwerkstück (26) verwendet wird, das einen unlegierten Stahl und/oder einen niedrig legierten Stahl und/oder einen hochlegierten Stahl und/oder ein Keramikmaterial und/oder einen Einsatzstahl, insbesondere 20MnCrS5-Einsatzstahl, aufweist oder daraus besteht, und/oder
dass die Spannfläche (7) mit einer insbesondere durch Oxidieren oder durch Manganphosphatieren aufgebrachten Oberflächenbeschichtung versehen wird.

## Claims

1. An expansion clamping device having a base body (2) defining a longitudinal axis, and an expansion bushing (5) which is inserted into or surrounds the base body (2), forming at least one pressure chamber (8), the pressure chamber (8) being exposable to a hydraulic medium with elastic deformation of the expansion bushing (5) to achieve a clamping effect, **characterized in that** the expansion bushing (5) is fixed to the base body (2) in a material-bonding manner through a friction welding joint (14) in the front axial end region (16) of the pressure chamber (8) and/or in the rear axial end region (17) of the pressure chamber (8).

2. The expansion clamping device of claim 1, **characterized in that** the pressure chamber (8), in its front and/or rear axial end region (16, 17) that is adjacent to a friction welding joint (14), accommodates a welding bead (15) produced upon creation of the friction welding joint (14) and is widened in particular in the radial direction with respect to a central region (18) of the pressure chamber (8) in the axial direction.

3. The expansion clamping device of claim 1 or 2, **characterized in that** the expansion bushing (5) is inserted into or surrounds the base body (2), forming a single pressure chamber (8) extending annularly around the longitudinal axis, and that the expansion bushing (5) is fixed to the base body (2) in a material-bonding manner through a friction welding joint (14) at its front and/or rear end portion (12, 13).

4. The expansion clamping device of any one of the preceding claims, **characterized in that** the expansion bushing (5) is inserted into or surrounds the base body (2), forming two pressure chambers (8) disposed axially behind each other, wherein in particular the expansion bushing (5) is fixed to the base body (2) in a material-bonding manner through a friction welding joint (14) axially between the pressure chambers (8) and/or wherein in particular the expansion bushing (5) is fixed to the base body (2) in a material-bonding manner through a friction welding joint (14) in the rear axial end region (17) of the rear pressure chamber (8) and/or in the front axial end region (16) of the front pressure chamber (8).

5. The expansion clamping device of any one of the preceding claims, **characterized in that** the or each friction welding joint (14) is produced by means of sliding friction welding and/or in that the or each friction welding joint (14) is produced by means of rotary welding, and/or **in that** the expansion bushing (5) is heat-treated, in particular case-hardened and/or quenched and tempered and/or nitrided, and/or
**in that** the expansion bushing (5) comprises or consists of a non-alloy steel and/or a low-alloy steel and/or a high-alloy steel and/or a ceramic material and/or a case-hardened steel, in particular a 20MnCrS5 case-hardened steel.

6. The expansion clamping device of any one of the preceding claims, **characterized in that** the expansion bushing (5) is inserted into the base body (2) and the inner surface of the expansion bushing (5) forms a clamping surface (7), the clamping surface (7) having a surface coating, or that the expansion bushing (5) surrounds the base body (2) and the outer surface of the expansion bushing (5) forms a clamping surface (7), the clamping surface (7) having a surface coating, the surface coating being applied in particular by oxidation or by manganese phosphating.

7. The expansion clamping device of any one of the preceding claims, **characterized in that** the expansion clamping device comprises clamping means configured to optionally cause an increase in the pressure in the hydraulic medium, the clamping means being operatively connected to the pressure chamber (8) via a hydraulic medium supply channel (23).

8. A method for manufacturing an expansion clamping device configured as an expansion chuck (1) and having a base body (2) defining a longitudinal axis, and an expansion bushing (5) which is inserted into the base body (2), forming at least one closed pressure chamber (8), and defines a central receptacle having a cylindrical basic shape and a clamping surface (7) into which a component to be clamped can be inserted from the front of the expansion clamping device, the method comprising the following steps:
a) providing a base body (2) having a central axial bore (4) which is open towards the front side of the base body (2), and an expansion bushing workpiece (26) having an expansion bushing shaft (27) of cylindrical basic shape, which is insertable into the central axial bore (4) of the base body (2), wherein recesses are formed in the outer surface of the expansion bushing shaft (27) and/or in the inner surface of the base body (2) defining the central axial bore (4) to form the at least one pressure chamber (8),
b) inserting the expansion bushing shaft (27) into the central axial bore (4) of the base body (2),
wherein the method is **characterized by** the steps of:
c) axially pressing the base body (2) and the expansion bushing workpiece (26) against each other while the base body (2) and/or the expansion bushing workpiece (26) perform movements about the longitudinal axis, in particular rotate about the longitudinal axis, to produce relative movement between the base body (2) and the expansion bushing workpiece (26), wherein mutually corresponding stop surfaces (28) of the base body (2) and the expansion bushing workpiece (26) are pressed axially against each other in the front axial end region (16) of the at least one pressure chamber (8) and/or in the rear axial end region (17) of the at least one pressure chamber (8) and are heated by friction so that the expansion bushing workpiece (26) is fixed to the base body (2) in a material-bonding manner through a friction welding joint (14) in the region of the stop surfaces (28),
d) stopping relative movement for the base body (2) and the expansion bushing workpiece (26) to cool down,
wherein in particular the expansion bushing workpiece (26) is pressed further into the base body (2) after relative movement was stopped.

9. The method of claim 8, **characterized in that** in steps a) to d), the expansion bushing shaft (27) is inserted into the base body (2), forming a single pressure chamber (8) extending annularly around the longitudinal axis, and that the expansion bushing shaft (27) is fixed to the base body (2) in a material-bonding manner through a friction welding joint (14) at its front and/or rear end portion (12, 13), and/or
**in that** in steps a) to d), the expansion bushing shaft (27) is inserted into the base body (2), forming two pressure chambers (8) disposed axially behind each other and extending annularly around the longitudinal axis, and that in particular the expansion bushing shaft (27) is fixed to the base body (2) in a material-bonding manner through a friction welding joint (14) axially between the pressure chambers (8), wherein in particular in step c), the respective mutually corresponding stop surfaces (28) of the base body (2) and the expansion bushing workpiece (26) are formed in the front axial end region (16) of the front pressure chamber (8) and/or in the rear axial end region (17) of the rear pressure chamber (8).

10. The method of claim 8 or 9, **characterized in that** the or each friction welding joint (14) is produced by means of sliding friction welding, and/or
**in that** the following further step is performed after steps a) to d):
e) cutting off a portion (29) of the expansion bushing workpiece (26) protruding from the front surface of the base body (2).

11. The method of any one of claims 8 to 10, **characterized in that** a solid expansion bushing shaft (27) is provided and a receptacle (6) is produced therein, in particular after step e), and/or
**in that** the expansion bushing shaft (27) provided in step a) is hollow, the expansion bushing shaft (27) being supported on the inside in steps b) to d) and/or a receptacle (6) being produced on the expansion bushing shaft (27) after step e), wherein in particular the expansion bushing shaft (27) including the existing receptacle (6) is heat-treated, in particular case-hardened and/or quenched and tempered and/or nitrided.

12. The method of any one of claims 8 to 11, **characterized in that** the expansion bushing shaft (26) comprises or consists of a non-alloy steel and/or a low-alloy steel and/or a high-alloy steel and/or a ceramic material and/or a case-hardened steel, in particular 20MnCrS5 case-hardened steel, and/or **in that** the clamping surface (7) is provided with a surface coating applied in particular by oxidation or by manganese phosphating.

13. A method for manufacturing an expansion clamping device configured as a clamping mandrel (19) and having a base body (2) defining a longitudinal axis, and an expansion bushing which surrounds the base body (2), forming at least one closed pressure chamber (8), and defines on its outer surface a clamping surface (7) onto which a component to be clamped can be pushed from the front of the expansion clamping device, the method comprising the following steps:
aa) providing a base body (2) having a cylindrical base body shaft (22) on its front side, and of a hollow expansion bushing workpiece (26) which can be pushed onto the base body shaft (22), wherein recesses are formed in the outer surface of the base body shaft (22) and/or in the inner surface of the expansion bushing workpiece (26) to form the at least one pressure chamber (8),
bb) pushing the expansion bushing workpiece (26) onto the base body shaft (22),
wherein the method is **characterized by** the steps of:
cc) axially pressing the base body (2) and the expansion bushing workpiece (26) against each other while the base body (2) and/or the expansion bushing workpiece (26) perform movements about the longitudinal axis, in particular rotate about the longitudinal axis, to produce relative movement between the base body and the expansion bushing workpiece (26), wherein mutually corresponding stop surfaces (28) of the base body (2) and the expansion bushing workpiece (26) are pressed axially against each other in the front axial end region (16) of the at least one pressure chamber (8) and/or in the rear axial end region (17) of the at least one pressure chamber (8) and are heated by friction so that the expansion bushing workpiece (26) is fixed to the base body (2) in a material-bonding manner through a friction welding joint (14) in the region of the stop surfaces (28),
dd) stopping relative movement for the base body (2) and the expansion bushing workpiece (26) to cool down,
wherein in particular the expansion bushing workpiece (26) is pressed further onto the base body shaft (22) after relative movement was stopped.

14. The method of claim 13, **characterized in that** in steps aa) to dd), the expansion bushing workpiece (26) surrounds the base body shaft (22), forming a single pressure chamber (8) extending annularly around the longitudinal axis, and that the expansion bushing workpiece (26) is fixed to the base body shaft (22) in a material-bonding manner through a friction welding joint (14) at its front and/or rear end portion (16, 17), or
**in that** in steps aa) to dd), the expansion bushing workpiece (26) surrounds the base body shaft (22), forming two pressure chambers (8) disposed axially behind each other and extending annularly around the longitudinal axis, and that in particular the expansion bushing workpiece (26) is fixed to the base body shaft (22) in a material-bonding manner through a friction welding joint (14) axially between the pressure chambers (8), wherein in particular in step cc), the respective mutually corresponding stop surfaces (28) of the base body (2) and the expansion bushing workpiece (26) are formed in the front axial end region (16) of the front pressure chamber (8) and/or in the rear axial end region (17) of the rear pressure chamber (8).

15. The method of claim 13 or 14, **characterized in that** the or each friction welding joint (14) is produced by means of sliding friction welding, and/or
**in that** the following further step is performed after steps aa) to dd):
ee) cutting off a portion (29) of the expansion bushing workpiece (26) protruding beyond the front surface of the base body (2),
and/or
**in that** in particular after step ee), at least one portion of the outer lateral surface of the expansion bushing workpiece (26) fixed to the base body is machined, wherein in particular the welding bead (15) produced upon creation of the friction welding joint (14) is removed and/or the clamping surface (7) is produced, and/or
**in that** the expansion bushing workpiece (26) including the existing clamping surface (7) is heat-treated, in particular case-hardened and/or quenched and tempered and/or nitrided, and/or
**in that** an expansion bushing workpiece (26) comprising or consisting of a non-alloy steel and/or a low-alloy steel and/or a high-alloy steel and/or a ceramic material and/or a case-hardened steel, in particular 20MnCrS5 case-hardened steel, is used, and/or
**in that** the clamping surface (7) is provided with a surface coating applied in particular by oxidation or by manganese phosphating.

## Revendications

1. Dispositif de serrage expansible comprenant un corps de base (2) qui définit un axe longitudinal, et une douille expansible (5) qui est insérée dans le corps de base (2) ou entoure celui-ci en formant au moins une chambre de pression (8), la chambre de pression (8) pouvant être soumise à un fluide hydraulique avec déformation élastique de la douille expansible (5) pour obtenir un effet de serrage, **caractérisé en ce que** la douille expansible (5) est fixée par liaison de matière sur le corps de base (2) au niveau de la zone d'extrémité axiale avant (16) de la chambre de pression (8) et/ou au niveau de la zone d'extrémité axiale arrière (17) de la chambre de pression (8) au moyen d'une soudure par friction (14).

2. Dispositif de serrage expansible selon la revendication 1, **caractérisé en ce que** la chambre de pression (8) reçoit dans sa zone d'extrémité axiale avant et/ou arrière (16, 17) voisine d'une soudure par friction (14) un bourrelet de soudure (15) produit lors de la réalisation de la soudure par friction (14) et est ici élargie en particulier dans la direction radiale par rapport à une zone centrale (18) dans la direction axiale de la chambre de pression (8).

3. Dispositif de serrage expansible selon la revendication 1 ou 2, **caractérisé en ce que** la douille expansible (5) est insérée dans le corps de base (2) ou entoure celui-ci en formant une seule chambre de pression (8) s'étendant en forme d'anneau autour de l'axe longitudinal, et la douille expansible (5) est fixée par liaison de matière sur le corps de base (2) au niveau de sa section d'extrémité avant et/ou arrière (12, 13) au moyen d'une soudure par friction (14).

4. Dispositif de serrage expansible selon l'une quelconque des revendications précédentes, **caractérisé en ce que** la douille expansible (5) est insérée dans le corps de base (2) ou entoure celui-ci en formant deux chambres de pression (8) situées axialement l'une derrière l'autre, en particulier la douille expansible (5) étant fixée axialement entre les chambres de pression (8) par liaison de matière sur le corps de base (2) au moyen d'une soudure par friction (14) et/ou en particulier la douille expansible (5) étant fixée par liaison par matière sur le corps de base (2) au niveau de la zone d'extrémité axiale arrière (17) de la chambre de pression arrière (8) et/ou au niveau de la zone d'extrémité axiale avant (16) de la chambre de pression avant (8) au moyen d'une soudure par friction (14).

5. Dispositif de serrage expansible selon l'une quelconque des revendications précédentes, **caractérisé en ce que** la ou chaque soudure par friction (14) est réalisée par soudage par friction glissant et/ou **en ce que** la ou chaque soudure par friction (14) est réalisée par un procédé de soudage par rotation, et/ou
**en ce que** la douille expansible (5) est traitée thermiquement, en particulier cémentée et/ou trempée et/ou nitrurée, et/ou
**en ce que** la douille expansible (5) comprend ou est constituée d'un acier non allié et/ou d'un acier faiblement allié et/ou d'un acier fortement allié et/ou d'un matériau céramique et/ou d'un acier de cémentation, en particulier d'un acier de cémentation 20MnCrS5.

6. Dispositif de serrage expansible selon l'une quelconque des revendications précédentes, **caractérisé en ce que** la douille expansible (5) est insérée dans le corps de base (2) et la surface intérieure de la douille expansible (5) forme une surface de serrage (7), la surface de serrage (7) étant pourvue d'un revêtement de surface, ou en ce que la douille expansible (5) entoure le corps de base (2) et la surface extérieure de la douille expansible (5) forme une surface de serrage (7), la surface de serrage (7) étant pourvue d'un revêtement de surface, le revêtement de surface étant en particulier appliqué par oxydation ou par phosphatation au manganèse.

7. Dispositif de serrage expansible selon quelconque l'une des revendications précédentes,
**caractérisé en ce que** le dispositif de serrage expansible comprend des moyens de serrage conçus pour provoquer sélectivement une augmentation de pression dans le fluide
hydraulique, les moyens de serrage étant reliés fonctionnellement à la chambre de pression (8) par un canal d'alimentation en fluide hydraulique (23).

8. Procédé de fabrication d'un dispositif de serrage expansible réalisé sous la forme d'un mandrin de serrage expansible (1) comprenant un corps de base (2) définissant un axe longitudinal et une douille expansible (5) insérée dans le corps de base (2) en formant au moins une chambre de pression (8) fermée et définissant un logement central de forme de base
cylindrique avec une surface de serrage (7) dans laquelle un composant à serrer peut être inséré depuis la face avant du dispositif de serrage expansible, comprenant les étapes consistant à :
a) mettre à disposition un corps de base (2) comprenant un alésage axial central (4) ouvert vers la face frontale avant du corps de base (2), et une pièce d'oeuvre de douille expansible (26) comprenant une tige de douille expansible (27) de forme de base cylindrique pouvant être insérée dans l'alésage axial central (4) du corps de base (2), des renfoncements étant formés dans la surface extérieure de la tige de douille expansible (27) et/ou dans la surface intérieure du corps de base (2) définissant l'alésage axial central (4) pour former ladite au moins une chambre de pression (8),
b) insérer la tige de douille expansible (27) dans l'alésage axial central (4) du corps de base (2),
le procédé étant **caractérisé par** les étapes consistant à :
c) presser axialement l'un contre l'autre le corps de base (2) et la pièce d'oeuvre de douille expansible (26), tandis que le corps de base (2) et/ou la pièce d'oeuvre de douille expansible (26) effectuent des mouvements autour de l'axe longitudinal, en particulier tournent autour de l'axe longitudinal, afin de générer un mouvement relatif entre le corps de base (2) et la pièce d'oeuvre de douille expansible (26), des surfaces de butée (28) du corps de base (2) et de la pièce d'oeuvre de douille expansible (26) qui se correspondent étant pressées axialement l'une contre l'autre au niveau de la zone d'extrémité axiale avant (16) de ladite au moins une chambre de pression (8) et/ou au niveau de la zone d'extrémité axiale arrière (17) de ladite au moins une chambre de pression (8) et étant échauffées par le frottement, de sorte que la pièce d'oeuvre de douille expansible (26) est fixée par liaison de matière sur le corps de base (2) dans la zone des surfaces de butée (28) au moyen d'une soudure par friction (14),
d) finir le mouvement relatif, de sorte que le corps de base (2) et la pièce d'oeuvre de douille expansible (26) refroidissent,
dans lequel en particulier la pièce d'oeuvre de douille expansible (26) est enfoncée davantage dans le corps de base (2) après la fin du mouvement relatif.

9. Procédé selon la revendication 8, **caractérisé en ce qu'**aux étapes a) à d), la tige de douille expansible (27) est insérée dans le corps de base (2) en formant une seule chambre de pression (8) s'étendant en forme d'anneau autour de l'axe longitudinal, et la tige de douille expansible (27) est fixée par liaison de matière sur le corps de base (2) au niveau de sa section d'extrémité avant et/ou arrière (12, 13) au moyen d'une soudure par friction (14), et/ou
**en ce qu'**aux étapes a) à d), la tige de douille expansible (27) est insérée dans le corps de base (2) en formant deux chambres de pression (8) situées axialement l'une derrière l'autre et s'étendant en forme d'anneau autour de l'axe longitudinal, et la tige de douille expansible (27) est fixée par liaison de matière, en particulier axialement entre les chambres de pression (8), sur le corps de base (2) au moyen d'une soudure par friction (14), les surfaces de butée (28) respectives du corps de base (2) et de la pièce d'oeuvre de douille expansible (26) qui se correspondent étant formées, en particulier à l'étape c), au niveau de la zone d'extrémité axiale avant (16) de la chambre de pression avant (8) et/ou au niveau de la zone d'extrémité axiale arrière (17) de la chambre de pression arrière (8).

10. Procédé selon la revendication 8 ou 9, **caractérisé en ce que** la ou chaque soudure par friction (14) est réalisée par soudage par friction glissant, et/ou
**en ce qu'**après les étapes a) à d), l'étape supplémentaire suivante est exécutée :
e) une section (29) de la pièce d'oeuvre de douille expansible (26) dépassant de la surface frontale avant du corps de base (2) est séparée.

11. Procédé selon l'une quelconque des revendications 8 à 10, **caractérisé en ce qu'**une tige de douille expansible massive (27) est mise à disposition et qu'un logement (6) est réalisé dans celle-ci, en particulier après l'étape e), et/ou
**en ce que** la tige de douille expansible (27) mise à disposition à l'étape a) est creuse, la tige de douille expansible (27) étant soutenue du côté intérieur pendant les étapes b) à d) et/ou un logement (6) étant réalisé sur la tige de douille expansible (27) après l'étape e), la tige de douille expansible (27) comprenant le logement (6) étant en particulier traitée thermiquement, en particulier cémentée et/ou trempée et/ou nitrurée.

12. Procédé selon l'une quelconque des revendications 8 à 11, **caractérisé en ce que** la tige de douille expansible (26) comprend ou est constituée d'un acier non allié et/ou d'un acier faiblement allié et/ou d'un acier fortement allié et/ou d'un matériau céramique et/ou d'un acier de cémentation, en particulier d'un acier de cémentation 20MnCrS5, et/ou
**en ce que** la surface de serrage (7) est pourvue d'un revêtement de surface appliqué en particulier par oxydation ou par phosphatation au manganèse.

13. Procédé de fabrication d'un dispositif de serrage expansible réalisé sous la forme d'un mandrin de serrage (19) comprenant un corps de base (2) définissantt un axe longitudinal, et une douille expansible qui entoure le corps de base (2) en formant au moins une chambre de pression fermée (8) et qui définit sur sa surface extérieure une surface de serrage (7) sur laquelle un composant à serrer peut être enfilé depuis la face avant du dispositif de serrage expansible, comprenant les étapes consistant à :
aa) mettre à disposition un corps de base (2) comprenant une tige de corps de base (22) cylindrique sur sa face frontale avant, et une pièce d'oeuvre de douille expansible (26) creuse qui peut être enfilée sur la tige de corps de base (22), des renfoncements étant formés dans la surface extérieure de la tige de corps de base (22) et/ou dans la surface intérieure de la pièce d'oeuvre de douille expansible (26) pour former ladite au moins une chambre de pression (8),
bb) enfiler la pièce d'oeuvre de douille expansible (26) sur le corps de base (22),
le procédé étant **caractérisé par** les étapes consistant à :
cc) presser axialement l'un contre l'autre le corps de base (2) et la pièce d'oeuvre de douille expansible (26), tandis que le corps de base (2) et/ou la pièce d'oeuvre de douille expansible (26) effectuent des mouvements autour de l'axe longitudinal, en particulier tournent autour de l'axe longitudinal, afin de générer un mouvement relatif entre le corps de base et la pièce d'oeuvre de douille expansible (26), des surfaces de butée (28) du corps de base (2) et de la pièce d'oeuvre de douille expansible (26) qui se correspondent étant pressées axialement l'une contre l'autre au niveau de la zone d'extrémité axiale avant (16) de ladite au moins une chambre de pression (8) et/ou au niveau de la zone d'extrémité axiale arrière (17) de ladite au moins une chambre de pression (8) et étant échauffées par le frottement, de sorte que la pièce d'oeuvre de douille expansible (26) est fixée par liaison de matière sur le corps de base (2) dans la zone des surfaces de butée (28) au moyen d'une soudure par friction (14),
dd) finir le mouvement relatif, de sorte que le corps de base (2) et la pièce d'oeuvre de douille expansible (26) refroidissent,
dans lequel en particulier la pièce d'oeuvre de douille expansible (26) est pressée davantage sur le corps de base (22) après la fin du mouvement relatif.

14. Procédé selon la revendication 13, **caractérisé en ce qu'**aux étapes aa) à dd), la pièce d'oeuvre de douille expansible (26) entoure le corps de base (22) en formant une seule chambre de pression (8) s'étendant en forme d'anneau autour de l'axe longitudinal et la pièce d'oeuvre de douille expansible (26) est fixée par liaison de matière sur le corps de base (22) au niveau de sa section d'extrémité avant et/ou arrière (16, 17) au moyen d'une soudure par friction (14), ou
**en ce qu'**aux étapes aa) à dd), la pièce d'oeuvre de douille expansible (26) entoure le corps de base (22) en formant deux chambres de pression (8) situées axialement l'une derrière l'autre et s'étendant en forme d'anneau autour de l'axe longitudinal, et la pièce d'oeuvre de douille expansible (26) est fixée par liaison de matière, en particulier axialement entre les chambres de pression (8), sur le corps de base (22) au moyen d'une soudure par friction (14), les surfaces de butée (28) respectives du corps de base (2) et de la pièce d'oeuvre de douille expansible (26) qui se correspondent étant formées, en particulier à l'étape cc), au niveau de la zone d'extrémité axiale avant (16) de la chambre de pression avant (8) et/ou au niveau de la zone d'extrémité axiale arrière (17) de la chambre de pression arrière (8).

15. Procédé selon la revendication 13 ou 14, **caractérisé en ce que**
la ou chaque soudure par friction (14) est réalisée par soudage par friction glissant, et/ou
**en ce qu'**après les étapes aa) à dd), l'étape supplémentaire suivante est exécutée :
ee) une section (29) de la pièce d'oeuvre de douille expansible (26) dépassant de la surface frontale avant du corps de base (2) est séparée.
et/ou
**en ce que**, en particulier après l'étape ee), au moins une partie de la surface d'enveloppe extérieure de la pièce d'oeuvre de douille expansible (26) fixée sur le corps de base est usinée, un bourrelet de soudure (15) produit lors de la réalisation de la soudure par friction (14) étant en particulier enlevé et/ou la surface de serrage (7) étant réalisée, et/ou
**en ce que** la pièce d'oeuvre de douille expansible (26) comprenant la surface de serrage (7) est traitée thermiquement, en particulier cémentée et/ou trempée et/ou nitrurée, et/ou
**en ce que** la pièce d'oeuvre de douille expansible (26) utilisée comprend ou est constituée d'un acier non allié et/ou d'un acier faiblement allié et/ou d'un acier fortement allié et/ou d'un matériau céramique et/ou d'un acier de cémentation, en particulier d'un acier de cémentation 20MnCrS5, et/ou
**en ce que** la surface de serrage (7) est pourvue d'un revêtement de surface appliqué en particulier par oxydation ou par phosphatation au manganèse.
